# EUROPEAN PATENT APPLICATION

(11) **EP 4 730 667 A1**
(43) Date of publication of application: **22.04.2026**
(21) Application number: 24842221.4
(22) Date of filing: 05.07.2024
(51) Int. Cl.: H04B 7/06

(54) **MULTI-LINK DATA PROCESSING METHOD AND RELATED APPARATUS**

(30) Priority: 17.07.2023 CN 202310874335
(71) Applicant: Huawei Technologies Co., Ltd., Shenzhen, Guangdong 518129 (CN)
(72) Inventor: LI, Ying, Shenzhen, Guangdong 518129 (CN); MAO, Zhi, Shenzhen, Guangdong 518129 (CN); GAN, Ming, Shenzhen, Guangdong 518129 (CN); LI, Yunbo, Shenzhen, Guangdong 518129 (CN); YU, Jian, Shenzhen, Guangdong 518129 (CN)
(74) Representative: Maiwald GmbH
(86) International application number: PCT/CN2024/103957
(87) International publication number: WO 2025/016226

(57) **Abstract**

This application provides a multi-link data processing method and a related apparatus. In the method, a first apparatus sends first indication information on a second link, where the first indication information indicates to perform link recovery by using a beam configuration parameter used before disconnection of a first link, and beamforming training does not need to be performed again, to avoid a waste of time. Therefore, the method can assist in quick link recovery of the disconnected first link, to help improve data transmission efficiency. This application is applied to a wireless local area network system that supports a next-generation Wi-Fi protocol of IEEE 802.11ax (for example, 802.11be, Wi-Fi 7, or EHT), a next-generation Wi-Fi protocol of IEEE 802.11be (for example, Wi-Fi 8 or UHR), Wi-Fi AI, millimeter wave (mmWave), ultra wideband (UWB), or sensing (sensing).

## Description

This application claims priority to Chinese Patent Application No. 202310874335.5, filed with the China National Intellectual Property Administration on July 17, 2023 and entitled "MULTI-LINK DATA PROCESSING METHOD AND RELATED APPARATUS", which is incorporated herein by reference in its entirety.

### TECHNICAL FIELD

This application relates to the field of communication technologies, and in particular, to a multi-link data processing method and a related apparatus.

### BACKGROUND

To meet transmission requirements for a high throughput and a low latency of emerging services, for example, augmented reality (augmented reality, AR), virtual reality (virtual reality, VR), and mixed reality (mixed reality, XR), a millimeter wave link (also referred to as a high-frequency link) may be added to a current multi-link device (multi-link device, MLD) communication model. When a plurality of links included in the MLD communication model include at least one millimeter wave link, an MLD device may perform data transmission on the millimeter wave link. When the MLD device performs data transmission on the millimeter wave link, if the millimeter wave link is blocked (for example, there is a physical barrier between an access point multi-link device (access point multi-link device, AP MLD) and a non-access point multi-link device (non-access point multi-link device, non-AP MLD)), how to efficiently use a low-frequency link in the MLD to assist in recovering the millimeter wave link is a problem to be resolved.

### SUMMARY

This application provides a multi-link data processing method and a related apparatus. The method may assist in quick link recovery of a disconnected millimeter wave link.

According to a first aspect, this application provides a multi-link data processing method. The method is performed by a first apparatus. The first apparatus is a transmitter. For example, in downlink data transmission, the first apparatus is an access point multi-link device, or may be a component (for example, a processor, a chip, or a chip system) of the access point multi-link device, or may be a logical module that can implement all or some functions of the access point multi-link device, and is configured to send downlink data. Alternatively, in uplink data transmission, the first apparatus is a non-access point multi-link device, or may be a component (for example, a processor, a chip, or a chip system) of the non-access point multi-link device, or may be a logical module that can implement all or some functions of the non-access point multi-link device, and is configured to send uplink data. The first apparatus sends first indication information on a second link, where the first indication information indicates to perform link recovery by using a beam configuration parameter used before disconnection of a first link. The first apparatus performs link recovery on the first link.

In the method, after the first link (for example, a millimeter wave link) is blocked and disconnected, the first apparatus may indicate, based on the first indication information, a transmitter and a receiver of data to attempt to perform link recovery on the first link, instead of directly performing beamforming training again on the first link. For example, after the millimeter wave link is blocked and disconnected, blocking may end in a very short time. If a location of the receiver does not move, the transmitter and the receiver may directly recover the link by using a beamforming configuration used before disconnection of the link, and beamforming training does not need to be performed again, to avoid a waste of time. Therefore, the method can assist in quick link recovery of the disconnected first link, to help improve data transmission efficiency.

In a possible implementation, the first apparatus configures the maximum retransmission time, where the maximum retransmission time indicates a maximum value of duration for performing link recovery on the first link. The maximum retransmission time is predefined in a protocol or determined through negotiation between an access point and a non-access point.

In the method, the first apparatus may configure the maximum retransmission time, to limit the transmitter and the receiver to attempting to perform link recovery within a specific time period, instead of attempting to perform link recovery within an unlimited time period, to avoid a waste of time.

In a possible implementation, if the first link is successfully recovered within the maximum retransmission time, the first apparatus sends data on the first link; or if the first link fails to be recovered after the maximum retransmission time, the first apparatus performs beamforming training again on the first link.

In the method, if link recovery is successfully attempted within the maximum retransmission time, the first apparatus may directly switch from the second link (for example, a link below 10 gigahertz (GHz) or a link below 7 GHz) to the first link (for example, a millimeter wave link) to perform data transmission, to avoid a waste of time. This helps improve data transmission efficiency. If link recovery fails, the first apparatus may directly perform beamforming training.

In a possible implementation, the first apparatus configures the maximum number of retransmissions, where the maximum number of retransmissions indicates a maximum value of a quantity of link recovery attempts performed on the first link. The maximum number of retransmissions is predefined in a protocol or determined through negotiation between an access point and a non-access point.

In the method, the first apparatus may configure the maximum number of retransmissions, to limit the transmitter and the receiver to attempting to perform link recovery within specific times, instead of attempting to perform link recovery within unlimited times, to avoid a waste of time.

In a possible implementation, if the first link is successfully recovered within the maximum number of retransmissions, the first apparatus sends data on the first link; or if the first link fails to be recovered after the maximum number of retransmissions, the first apparatus performs beamforming training again on the first link.

In the method, if link recovery is successfully attempted within the maximum number of retransmissions, the first apparatus may directly switch from the second link (for example, a link below 10 GHz or a link below 7 GHz) to the first link (for example, a millimeter wave link) to perform data transmission, to avoid a waste of time. This helps improve data transmission efficiency. If link recovery fails, the first apparatus may directly perform beamforming training.

In a possible implementation, when link recovery is performed on the first link by using the beam configuration parameter used before disconnection of the first link, the first apparatus performs link recovery by using a short data frame, a control frame, or a management frame.

In the method, the first apparatus may send a short data frame, a control frame, or a management frame on the first link by using the beam configuration parameter used before disconnection of the first link, to attempt to recover link information, so as to assist in quick link recovery of the disconnected millimeter wave link.

In a possible implementation, when link recovery is performed on the first link by using a first modulation and code scheme, the first apparatus performs link recovery by using a data frame of the first modulation and code scheme. A modulation order of the first modulation and code scheme is less than a modulation order of a second modulation and code scheme, and/or a code rate of the first modulation and code scheme is less than a code rate of the second modulation and code scheme; and the second modulation and code scheme is a modulation and code scheme used before disconnection of the first link.

In the method, the first apparatus may send a data frame on the first link by using a lower modulation and code scheme (for example, a modulation and code scheme with a lower modulation order and/or a lower code rate), to attempt to recover link information, so as to assist in quick recovery of the disconnected millimeter wave link.

In a possible implementation, the first indication information is included in a data frame, or the first indication information is a management frame or a control frame.

In the method, the first indication information may be transmitted in a form of management frame, or in a form of control frame, or in a form of data frame piggyback. An implementation is more flexible.

In a possible implementation, the first apparatus separately configures a first service period on the first link and the second link, where a start moment of the first service period is a first moment, the first moment is a specified moment at which a transmitter and a receiver of the first link are synchronized after disconnection of the first link. An operating frequency of the second link is lower than an operating frequency of the first link. Alternatively, the first apparatus configures the first service period on the first link.

In the method, the first apparatus may set the first service period (for example, a target wake time service period TWT SP) on both a millimeter wave link and a link below 10 GHz or below 7 GHz, or the first apparatus may set the first service period only on the millimeter wave link, so that the transmitter and the receiver of the first link may attempt to recover the first link in the first service period.

In a possible implementation, when a first service period is not configured on the second link, the first apparatus sends second indication information, where the second indication information indicates, to a receiver, that there is data that needs to be sent on a link below 10 GHz or a link below 7 GHz at a transmitter.

In the method, if no first service period is configured on the second link, the transmitter needs to notify the receiver that there is data that needs to be sent on the second link, so that the second link can be quickly woken up to transmit the data originally on the first link, to ensure continuity of data transmission.

In a possible implementation, the first indication information is included in a first field, or the first indication information is included in a combination of a first field and a second field. When the first indication information is included in the first field, the first field is used to indicate to perform beamforming training again on the first link or indicate to perform link recovery and then perform beamforming training again after link recovery fails; or when the first indication information is included in the combination of the first field and the second field, the combination of the first field and the second field is used to indicate to perform beamforming training on the first link, indicate to perform link recovery and not to perform beamforming training, or indicate to perform link recovery and then perform beamforming training again after link recovery fails.

In the method, two different field indication manners are defined, so that the receiver and the transmitter can be efficiently indicated to use the second link to assist the first link in link recovery.

In a possible implementation, the second link includes a link below 10 GHz or a link below 7 GHz, and the first link is a millimeter wave link.

According to a second aspect, this application provides a multi-link data processing method. The method is performed by a first apparatus. The first apparatus sends first indication information on a second link, where the first indication information indicates to perform link recovery by using a first modulation and code scheme within a maximum retransmission time or a maximum number of retransmissions. A modulation order of the first modulation and code scheme is less than a modulation order of a second modulation and code scheme, and/or a code rate of the first modulation and code scheme is less than a code rate of the second modulation and code scheme; and the second modulation and code scheme is a modulation and code scheme used before disconnection of the first link. The first apparatus performs link recovery on the first link.

In the method, after the first link is blocked and disconnected, the first apparatus may indicate, based on the first indication information, a transmitter and a receiver of data to attempt to perform link recovery on the first link, instead of directly performing beamforming training again on the first link. For example, after the millimeter wave link is blocked and disconnected, blocking may end in a very short time. If a location of the receiver does not move, the receiver may perform link recovery by using a lower modulation and code scheme, instead of directly performing beamforming training again, to avoid a waste of time. Therefore, the method can assist in quick link recovery of the disconnected first link, to help improve data transmission efficiency.

It may be understood that for other possible implementations in the second aspect, refer to specific descriptions in other possible implementations in the first aspect. Details are not described herein again.

According to a third aspect, this application provides a multi-link data processing method. The method is performed by a second apparatus. The second apparatus is a receiver. For example, in downlink data transmission, the second apparatus is a non-access point multi-link device, or may be a component (for example, a processor, a chip, or a chip system) of the non-access point multi-link device, or may be a logical module that can implement all or some functions of the non-access point multi-link device, and is configured to receive downlink data. Alternatively, in uplink data transmission, the second apparatus is an access point multi-link device, or may be a component (for example, a processor, a chip, or a chip system) of the access point multi-link device, or may be a logical module that can implement all or some functions of the access point multi-link device, and is configured to receive uplink data. The second apparatus receives first indication information on a second link, where the first indication information indicates to perform link recovery by using a beam configuration parameter used before disconnection of a first link. The second apparatus performs link recovery on the first link.

In the method, after the first link is blocked and disconnected, the second apparatus may receive the first indication information, so that the second apparatus may attempt to perform link recovery on the first link by using a lower modulation and code scheme within a preset time period or a preset maximum quantity of times, instead of directly performing beamforming training on the first link again, to avoid a waste of time. The method can assist in quick link recovery of the disconnected first link, to help improve data transmission efficiency.

In a possible implementation, the second apparatus configures the maximum retransmission time, where the maximum retransmission time indicates a maximum value of duration for performing link recovery on the first link. The maximum retransmission time is predefined in a protocol or determined through negotiation between an access point and a non-access point.

In the method, the second apparatus may configure the maximum retransmission time, to limit the transmitter and the receiver to attempting to perform link recovery within a specific time period, instead of attempting to perform link recovery within an unlimited time period, to avoid a waste of time.

In a possible implementation, if the first link is successfully recovered within the maximum retransmission time, the second apparatus receives data on the first link; or if the first link fails to be recovered after the maximum retransmission time, the second apparatus performs beamforming training again on the first link.

In the method, if link recovery is successfully attempted within the maximum retransmission time, the second apparatus may directly switch from the second link to the first link to perform data transmission, to avoid a waste of time. This helps improve data transmission efficiency. If link recovery fails, the second apparatus may directly perform beamforming training.

In a possible implementation, the second apparatus configures the maximum number of retransmissions, where the maximum number of retransmissions indicates a maximum value of a quantity of link recovery attempts performed on the first link. The maximum number of retransmissions is predefined in a protocol or determined through negotiation between an access point and a non-access point.

In the method, the second apparatus may configure the maximum number of retransmissions, to limit the transmitter and the receiver to attempting to perform link recovery within specific times, instead of attempting to perform link recovery within unlimited times, to avoid a waste of time.

In a possible implementation, if the first link is successfully recovered within the maximum number of retransmissions, the second apparatus receives data on the first link; or if the first link fails to be recovered after the maximum number of retransmissions, the second apparatus performs beamforming training again on the first link.

In the method, if link recovery is successfully attempted within the maximum number of retransmissions, the second apparatus may directly switch from the second link to the first link to perform data transmission, to avoid a waste of time. This helps improve data transmission efficiency. If link recovery fails, the second apparatus may directly perform beamforming training.

In a possible implementation, when link recovery is performed on the first link by using the beam configuration parameter used before disconnection of the first link, the second apparatus performs link recovery by using a short data frame, a control frame, or a management frame.

In the method, the second apparatus may receive a short data frame, a control frame, or a management frame on the first link by using the beam configuration parameter used before disconnection of the first link, to attempt to recover link information, so as to assist in quick link recovery of the disconnected millimeter wave link.

In a possible implementation, when link recovery is performed on the first link by using a first modulation and code scheme, the second apparatus performs link recovery by using a data frame of the first modulation and code scheme. A modulation order of the first modulation and code scheme is less than a modulation order of a second modulation and code scheme, and/or a code rate of the first modulation and code scheme is less than a code rate of the second modulation and code scheme; and the second modulation and code scheme is a modulation and code scheme used before disconnection of the first link.

In the method, the second apparatus may receive a data frame on the first link by using a lower modulation and code scheme (for example, a modulation and code scheme with a lower modulation order and/or a lower code rate), to attempt to recover link information, so as to assist in quick recovery of the disconnected millimeter wave link.

In a possible implementation, the first indication information is included in a data frame, or the first indication information is a management frame or a control frame.

In the method, the first indication information may be transmitted in a form of management frame, or in a form of control frame, or in a form of data frame piggyback. An implementation is more flexible.

In a possible implementation, the second apparatus separately configures a first service period on the first link and the second link, where a start moment of the first service period is a first moment, the first moment is a specified moment at which a transmitter and a receiver of the first link are synchronized after disconnection of the first link. An operating frequency of the second link is lower than an operating frequency of the first link. Alternatively, the second apparatus configures the first service period on the first link.

In the method, the second apparatus may set the first service period (for example, a target wake time service period TWT SP) on both a millimeter wave link and a link below 10 GHz or below 7 GHz, or the second apparatus may set the first service period only on the millimeter wave link, so that the transmitter and the receiver of the first link may attempt to recover the first link in the first service period.

In a possible implementation, when a first service period is not configured on the second link, the second apparatus receives second indication information, where the second indication information indicates, to a receiver, that there is data that needs to be sent on a link below 10 GHz or a link below 7 GHz at a transmitter.

In the method, if no first service period is configured on the second link, the transmitter needs to notify the receiver that there is data that needs to be sent on the second link, so that the second link can be quickly woken up to transmit the data originally on the first link, to ensure continuity of data transmission.

In a possible implementation, the first indication information is included in a first field, or the first indication information is included in a combination of a first field and a second field. When the first indication information is included in the first field, the first field is used to indicate to perform beamforming training again on the first link or indicate to perform link recovery and then perform beamforming training again after link recovery fails; or when the first indication information is included in the combination of the first field and the second field, the combination of the first field and the second field is used to indicate to perform beamforming training again on the first link, indicate to perform link recovery and not to perform beamforming training, or indicate to perform link recovery and then perform beamforming training again after link recovery fails.

In the method, two different field indication manners are defined, so that the receiver and the transmitter can be efficiently indicated to use the second link to assist the first link in link recovery.

In a possible implementation, the second link includes a link below 10 GHz or a link below 7 GHz, and the first link is a millimeter wave link.

According to a fourth aspect, this application provides a multi-link data processing method. The method is performed by a second apparatus. A first apparatus receives first indication information on a second link, where the first indication information indicates to perform link recovery by using a first modulation and code scheme within a maximum retransmission time or a maximum number of retransmissions; a modulation order of the first modulation and code scheme is less than a modulation order of a second modulation and code scheme, and/or a code rate of the first modulation and code scheme is less than a code rate of the second modulation and code scheme; and the second modulation and code scheme is a modulation and code scheme used before disconnection of the first link. The second apparatus performs link recovery on the first link.

In the method, after the first link is blocked and disconnected, the second apparatus may receive the first indication information, so that the second apparatus may attempt to perform link recovery on the first link by using a lower modulation and code scheme within a preset time period or a preset maximum quantity of times, instead of directly performing beamforming training on the first link again, to avoid a waste of time. The method can assist in quick link recovery of the disconnected first link, to help improve data transmission efficiency.

It may be understood that for other possible implementations in the fourth aspect, refer to specific descriptions in other possible implementations in the third aspect. Details are not described herein again.

According to a fifth aspect, this application provides a communication apparatus. The communication apparatus may be an access point multi-link device or a non-access point multi-link device, or may be an apparatus of an access point multi-link device or a non-access point multi-link device, or may be an apparatus that can be used in combination with an access point multi-link device or a non-access point multi-link device. In a possible implementation, the communication apparatus may include a functional module. The functional module may be implemented by a hardware circuit, software, or a combination of a hardware circuit and software. It may be understood that the communication apparatus in the fifth aspect may be configured to implement the multi-link data processing methods described in the first aspect and the second aspect.

In a possible implementation, the communication apparatus includes a communication unit and a processing unit. The communication unit is configured to send first indication information on a second link, where the first indication information indicates to perform link recovery by using a beam configuration parameter used before disconnection of a first link. The processing unit is configured to perform link recovery on the first link.

In a possible implementation, the communication unit is configured to send the first indication information on the second link, where the first indication information indicates to perform link recovery by using a first modulation and code scheme within a maximum retransmission time or a maximum number of retransmissions. A modulation order of the first modulation and code scheme is less than a modulation order of a second modulation and code scheme, and/or a code rate of the first modulation and code scheme is less than a code rate of the second modulation and code scheme; and the second modulation and code scheme is a modulation and code scheme used before disconnection of the first link. The processing unit is configured to perform link recovery on the first link.

In a possible implementation, the processing unit is configured to configure the maximum retransmission time, where the maximum retransmission time indicates a maximum value of duration for performing link recovery on the first link. The maximum retransmission time is predefined in a protocol or determined through negotiation between an access point and a non-access point.

In a possible implementation, if the first link is successfully recovered within the maximum retransmission time, the communication unit is configured to send data on the first link; or if the first link fails to be recovered after the maximum retransmission time, the processing unit is configured to perform beamforming training again on the first link.

In a possible implementation, the processing unit is configured to configure the maximum number of retransmissions, where the maximum number of retransmissions indicates a maximum value of a quantity of link recovery attempts performed on the first link. The maximum number of retransmissions is predefined in a protocol or determined through negotiation between an access point and a non-access point.

In a possible implementation, if the first link is successfully recovered within the maximum number of retransmissions, the communication unit is configured to send data on the first link; or if the first link fails to be recovered after the maximum number of retransmissions, the first apparatus performs beamforming training again on the first link.

In a possible implementation, when link recovery is performed on the first link by using the beam configuration parameter used before disconnection of the first link, the processing unit is configured to perform link recovery by using a short data frame, a control frame, or a management frame.

In a possible implementation, when link recovery is performed on the first link by using a first modulation and code scheme, the processing unit is configured to perform link recovery by using a data frame of the first modulation and code scheme. A modulation order of the first modulation and code scheme is less than a modulation order of a second modulation and code scheme, and/or a code rate of the first modulation and code scheme is less than a code rate of the second modulation and code scheme; and the second modulation and code scheme is a modulation and code scheme used before disconnection of the first link.

In a possible implementation, the first indication information is included in a data frame, or the first indication information is a management frame or a control frame.

In a possible implementation, the processing unit is configured to separately configure a first service period on the first link and the second link, where a start moment of the first service period is a first moment, the first moment is a specified moment at which a transmitter and a receiver of the first link are synchronized after disconnection of the first link. An operating frequency of the second link is lower than an operating frequency of the first link. Alternatively, the processing unit is configured to configure the first service period on the first link.

In a possible implementation, when a first service period is not configured on the second link, the communication unit is configured to send second indication information, where the second indication information indicates, to a receiver, that there is data that needs to be sent on a link below 10 GHz or a link below 7 GHz at a transmitter.

In a possible implementation, the first indication information is included in a first field, or the first indication information is included in a combination of a first field and a second field. When the first indication information is included in the first field, the first field is used to indicate to perform beamforming training again on the first link or indicate to perform link recovery and then perform beamforming training again after link recovery fails; or when the first indication information is included in the combination of the first field and the second field, the combination of the first field and the second field is used to indicate to perform beamforming training again on the first link, indicate to perform link recovery and not to perform beamforming training, or indicate to perform link recovery and then perform beamforming training again after link recovery fails.

In a possible implementation, the second link includes a link below 10 GHz or a link below 7 GHz, and the first link is a millimeter wave link.

According to a sixth aspect, this application provides a communication apparatus. The communication apparatus may be an access point multi-link device or a non-access point multi-link device, or may be an apparatus of an access point multi-link device or a non-access point multi-link device, or may be an apparatus that can be used in combination with an access point multi-link device or a non-access point multi-link device. In a possible implementation, the communication apparatus may include a functional module. The functional module may be implemented by a hardware circuit, software, or a combination of a hardware circuit and software. It may be understood that the communication apparatus in the sixth aspect may be configured to implement the multi-link data processing methods described in the third aspect and the fourth aspect.

In a possible implementation, the communication apparatus includes a communication unit and a processing unit. The communication unit is configured to receive first indication information on a second link, where the first indication information indicates to perform link recovery by using a beam configuration parameter used before disconnection of a first link. The processing unit is configured to perform link recovery on the first link.

In a possible implementation, the communication unit is configured to receive first indication information on a second link, where the first indication information indicates to perform link recovery by using a first modulation and code scheme within a maximum retransmission time or a maximum number of retransmissions; a modulation order of the first modulation and code scheme is less than a modulation order of a second modulation and code scheme, and/or a code rate of the first modulation and code scheme is less than a code rate of the second modulation and code scheme; and the second modulation and code scheme is a modulation and code scheme used before disconnection of the first link. The processing unit is configured to perform link recovery on the first link.

In a possible implementation, the processing unit is configured to configure the maximum retransmission time, where the maximum retransmission time indicates a maximum value of duration for performing link recovery on the first link. The maximum retransmission time is predefined in a protocol or determined through negotiation between an access point and a non-access point.

In a possible implementation, if the first link is successfully recovered within the maximum retransmission time, the communication unit is configured to receive data on the first link; or if the first link fails to be recovered after the maximum retransmission time, the processing unit is configured to perform beamforming training again on the first link.

In a possible implementation, the processing unit is configured to configure the maximum number of retransmissions, where the maximum number of retransmissions indicates a maximum value of a quantity of link recovery attempts performed on the first link. The maximum number of retransmissions is predefined in a protocol or determined through negotiation between an access point and a non-access point.

In a possible implementation, if the first link is successfully recovered within the maximum number of retransmissions, the communication unit is configured to receive data on the first link; or if the first link fails to be recovered after the maximum number of retransmissions, the processing unit is configured to perform beamforming training again on the first link.

In a possible implementation, when link recovery is performed on the first link by using the beam configuration parameter used before disconnection of the first link, the processing unit is configured to perform link recovery by using a short data frame, a control frame, or a management frame.

In a possible implementation, when link recovery is performed on the first link by using a first modulation and code scheme, the processing unit is configured to perform link recovery by using a data frame of the first modulation and code scheme. A modulation order of the first modulation and code scheme is less than a modulation order of a second modulation and code scheme, and/or a code rate of the first modulation and code scheme is less than a code rate of the second modulation and code scheme; and the second modulation and code scheme is a modulation and code scheme used before disconnection of the first link.

In a possible implementation, the first indication information is included in a data frame, or the first indication information is a management frame or a control frame.

In a possible implementation, the processing unit is configured to separately configure a first service period on the first link and the second link, where a start moment of the first service period is a first moment, the first moment is a specified moment at which a transmitter and a receiver of the first link are synchronized after disconnection of the first link. An operating frequency of the second link is lower than an operating frequency of the first link. Alternatively, the processing unit is configured to configure the first service period on the first link.

In a possible implementation, when a first service period is not configured on the second link, the communication unit is configured to receive second indication information, where the second indication information indicates, to a receiver, that there is data that needs to be sent on a link below 10 GHz or a link below 7 GHz at a transmitter.

In a possible implementation, the first indication information is included in a first field, or the first indication information is included in a combination of a first field and a second field. When the first indication information is included in the first field, the first field is used to indicate to perform beamforming training again on the first link or indicate to perform link recovery and then perform beamforming training again after link recovery fails; or when the first indication information is included in the combination of the first field and the second field, the combination of the first field and the second field is used to indicate to perform beamforming training again on the first link, indicate to perform link recovery and not to perform beamforming training, or indicate to perform link recovery and then perform beamforming training again after link recovery fails.

In a possible implementation, the second link includes a link below 10 GHz or a link below 7 GHz, and the first link is a millimeter wave link.

For the fifth aspect or the sixth aspect, in an example, the processing unit may be a processor, and the communication unit may be a transceiver unit, a transceiver, or a communication interface. It may be understood that when the communication apparatus is a communication device (for example, an access point multi-link device), the communication unit may be a transceiver in the communication apparatus, for example, implemented by using an antenna, a feeder, and a codec in the communication apparatus. Alternatively, when the communication apparatus is a chip disposed in the device, the processing unit may be a processing circuit, a logic circuit, or the like of the chip, and the communication unit may be an input/output interface of the chip, for example, an input/output circuit or a pin.

According to a seventh aspect, this application provides an access point multi-link device, including a processor configured to execute instructions. Optionally, the access point multi-link device further includes a memory. The memory is configured to store the instructions. When the instructions are executed by the processor, the communication apparatus is enabled to implement the method in any one of the first aspect to the fourth aspect and the possible implementations of the first aspect to the fourth aspect. Optionally, the processor is coupled to the memory.

According to an eighth aspect, this application provides a non-access point multi-link device, including a processor configured to execute instructions. Optionally, the non-access point multi-link device further includes a memory. The memory is configured to store the instructions. When the instructions are executed by the processor, the communication apparatus is enabled to implement the method in any one of the first aspect to the fourth aspect and the possible implementations of the first aspect to the fourth aspect. Optionally, the processor is coupled to the memory.

According to a ninth aspect, this application provides a communication system. The communication system includes a plurality of apparatuses or devices in the fifth aspect to the eighth aspect, so that the apparatuses or devices perform the method in any one of the first aspect to the fourth aspect and the possible implementations of the first aspect to the fourth aspect.

According to a tenth aspect, this application provides a computer-readable storage medium. The computer-readable storage medium stores instructions. When the instructions are run on a computer, the computer is enabled to perform the method in any one of the first aspect to the fourth aspect and the possible implementations of the first aspect to the fourth aspect.

According to an eleventh aspect, this application provides a chip system. The chip system includes a processor and an interface, optionally, may further include a memory, and is configured to implement the method in any one of the first aspect to the fourth aspect and the possible implementations of the first aspect to the fourth aspect. The chip system may include a chip, or may include a chip and another discrete component.

According to a twelfth aspect, this application further provides a computer program product including instructions. When the instructions are run on a computer, the computer is enabled to perform the method in any one of the first aspect to the fourth aspect and the possible implementations of the first aspect to the fourth aspect.

### BRIEF DESCRIPTION OF DRAWINGS

FIG. 1A is a diagram of a communication system according to this application;
FIG. 1B is a diagram of a specific implementation of a communication system according to this application;
FIG. 2 is a diagram of a multi-link device that includes a low-frequency link and a millimeter wave link according to this application;
FIG. 3 is a diagram in which a low-frequency link assists a millimeter wave link in data transmission and link recovery;
FIG. 4 is another diagram in which a low-frequency link assists a millimeter wave link in data transmission and link recovery;
FIG. 5 is a schematic flowchart of a multi-link data processing method according to this application;
FIG. 6 is a schematic flowchart of another multi-link data processing method according to this application;
FIG. 7 is a diagram of performing link recovery by using a beam configuration parameter used before disconnection of a first link under a constraint of a maximum number of retransmissions according to this application;
FIG. 8 is another diagram of performing link recovery by using a beam configuration parameter used before disconnection of a first link under a constraint of a maximum number of retransmissions according to this application;
FIG. 9 is a diagram of performing link recovery by using a beam configuration parameter used before disconnection of a first link under a constraint of a maximum retransmission time according to this application;
FIG. 10 is another diagram of performing link recovery by using a beam configuration parameter used before disconnection of a first link under a constraint of a maximum number of retransmissions according to this application;
FIG. 11 is a diagram of performing link recovery by using a first modulation and code scheme under a constraint of a maximum number of retransmissions according to this application;
FIG. 12 is a diagram of performing link recovery by using a first modulation and code scheme under a constraint of a maximum retransmission time according to this application;
FIG. 13 is a diagram of an apparatus according to this application; and
FIG. 14 to FIG. 16 each are a diagram of a multi-link device according to this application.

### DESCRIPTION OF EMBODIMENTS

In embodiments of this application, "/" may indicate an "or" relationship between associated objects. For example, A/B may indicate A or B. "and/or" may be used to indicate that there are three relationships between associated objects. For example, A and/or B may indicate the following three cases: Only A exists, both A and B exist, and only B exists, where A and B may be singular or plural. For ease of describing the technical solutions in embodiments of this application, in embodiments of this application, words such as "first" and "second" may be used to distinguish technical features with a same or similar function. The words such as "first" and "second" do not limit a quantity and an execution sequence, and the words such as "first" and "second" do not limit a definite difference. In embodiments of this application, the word such as "example" or "for example" is used to indicate an example, evidence, or a description. Any embodiment or design solution described as "example" or "for example" should not be explained as being more preferred or having more advantages than another embodiment or design solution. A word such as "example" or "for example" is used to present a related concept in a specific manner for ease of understanding.

The following describes the technical solutions in embodiments of this application with reference to the accompanying drawings in embodiments of this application.

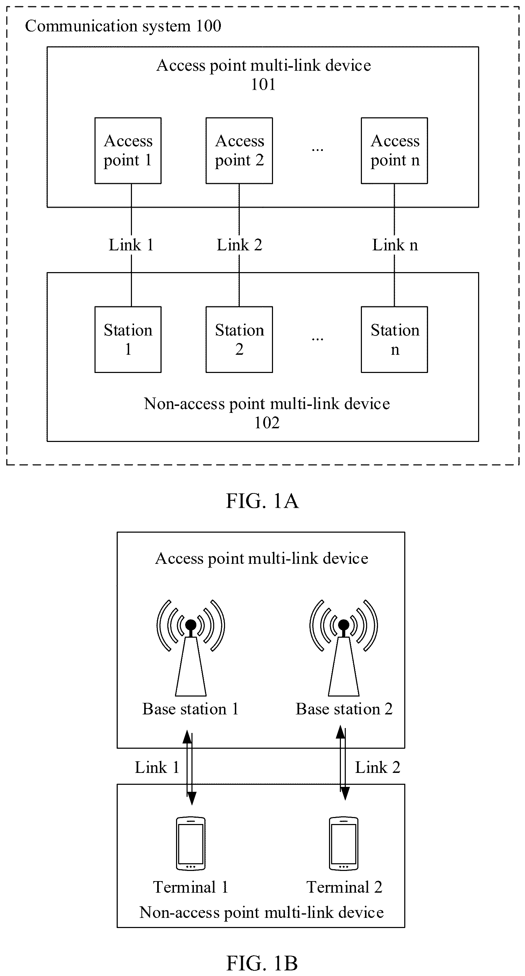

This application provides a multi-link data processing method based on a communication system shown in FIG. 1A. The method can assist in quick link recovery of a disconnected millimeter wave link, to improve transmission efficiency. A communication system 100 shown in FIG. 1A includes at least two multi-link devices (multi-link device, MLD). For example, one is an access point (access point, AP) multi-link device 101 (AP MLD for short), and the other is a non-access point (non-access point, non-AP) multi-link device 102 (non-APMLD for short, also referred to as a station multi-link device (station multi-link device, STA MLD)).

The access point multi-link device 101 includes one or more APs (for example, includes an AP 1 to an AP n). The non-access point multi-link device 102 includes one or more non-AP STAs (for example, includes a STA 1 to a STAn). The non-access point multi-link device 102 may communicate with the access point multi-link device 101 after establishing a plurality of links (referred to as multi-link establishment or multi-link association for short) with the access point multi-link device 101. In a multi-link establishment (or multi-link association) process, a STA in the non-access point multi-link device 102 may send an association request frame to an AP in the access point multi-link device 101. The association request frame includes a multi-link element (multi-link element, MLE, or referred to as a multi-link information unit) to include information about the non-access point multi-link device 102 and/or information about another STA in the non-access point multi-link device 102. Similarly, an association response frame returned by the AP in the access point multi-link device 101 to the corresponding (associated) STA may also include an MLE, to include information about the access point multi-link device 101 and/or information about another AP in the access point multi-link device 101. For example, the STA 1 may establish a link with the AP 1 (which may also be referred to as that the STA 1 is associated with the AP 1, and communication may be performed on a link 1), and an AP 2 may establish a link with a STA 2 (which may also be referred to as that the STA 2 is associated with the AP 2, and communication may be performed on a link 2). The rest may be deduced by analogy. After the link 1 to a link n shown in FIG. 1A are established, the non-access point multi-link device 102 may communicate with the access point multi-link device 101 on the link 1 to the link n.

### I. Related concepts in this application.

### 1. Communication system

In this application, the communication system may be a wireless local area network (wireless local area network, WLAN), a cellular network, or another wireless communication system that supports parallel communication on a plurality of links. Embodiments of this application are mainly described by using a network in which IEEE 802.11 is deployed as an example. Various aspects in this application may be extended to other networks that use various standards or protocols, for example, BLUETOOTH (Bluetooth), high-performance radio LAN (high performance radio LAN, HIPERLAN) (a wireless standard similar to the IEEE 802.11 standard, mainly used in Europe), a wide area network (WAN), a personal area network (personal area network, PAN), or another network that is known or developed in the future. A network architecture and a service scenario that are described in embodiments of this application are intended to describe the technical solutions in embodiments of this application more clearly, but do not constitute any limitation on the technical solutions provided in embodiments of this application. Therefore, regardless of used coverage and a used wireless access protocol, various aspects provided in this application are applicable to any appropriate wireless network. A person of ordinary skill in the art may learn that the technical solutions provided in embodiments of this application are also applicable to a similar technical problem as a communication network architecture evolves and a new service scenario emerges.

### 2. Multi-link device

Currently, WLAN standards under discussion include 802.11be and 802.11bn. 802.11be (Wi-Fi 7) is referred to as extremely high throughput (extremely high throughput, EHT), and 802.11bn (Wi-Fi 8) is referred to as ultra high reliability (ultra high reliability, UHR). A multi-link (multi-link, ML) mechanism is introduced in 802.11be. The multi-link means that operating can be performed on a plurality of frequency bands or a plurality of channels. For example, the multi-link mechanism may establish new spectrum management, coordination, and transmission mechanisms on 2.4 GHz, 5 GHz, and 6 GHz, and mainly includes related technologies such as a MAC architecture for enhanced multi-link aggregation, multi-link channel access, and multi-link transmission. In this application, links on 2.4 GHz, 5 GHz, and 6 GHz are referred to as links below 10 GHz or links below 7 GHz, and may also be referred to as low-frequency links. This application is applied to a wireless local area network system that supports a next-generation Wi-Fi protocol of IEEE 802.11ax (for example, 802.11be, Wi-Fi 7, or EHT), a next-generation Wi-Fi protocol of IEEE 802.11be (for example, Wi-Fi 8 or UHR), Wi-Fi AI, millimeter wave (mmWave), ultra wideband (ultra wideband, UWB), or sensing (sensing).

The multi-link mechanism may be implemented by using a multi-link device. For example, the multi-link device may simultaneously perform communication on 2.4 GHz, 5 GHz, and 6 GHz frequency bands, or simultaneously perform communication on different channels on a same frequency band, to improve a communication rate between devices, and implement efficient utilization of spectrum resources. The multi-link device may implement wireless communication according to 802.11 series protocols. For example, the multi-link device may be a station in compliance with EHT, or may be a station in compliance with 802.11be or compatible with 802.11be, to implement communication with another device. The another device may be a multi-link device, or may not be a multi-link device.

The multi-link device usually includes a plurality of STAs or a plurality of APs, and each STA or each AP operates on a specific frequency band or channel. The multi-link device may be an access point device (an AP MLD), or may be a station device (a non-AP MLD or referred to as a non-AP STA MLD). If the device is an access point device (for example, the access point multi-link device 101 shown in FIG. 1A), the device includes one or more APs. If the device is a station device (for example, the non-access point multi-link device 102 shown in FIG. 1A), the device includes one or more non-AP STAs. The station device may communicate with the access point device after establishing a plurality of links (referred to as multi-link establishment or multi-link association for short) with the access point device.

In this application, the multi-link device (for example, the AP MLD and the non-AP MLD in FIG. 1A) is an apparatus having a wireless communication function. The apparatus may be an entire device, or may be a chip, a processing system, or the like installed in an entire device. The device in which the chip or the processing system is installed may implement the methods and functions in this application under control of the chip or the processing system. For example, the multi-link device may be a multi-link device with a single antenna (or a single radio frequency module), or may be a multi-link device with a plurality of antennas (or a plurality of radio frequency modules). A quantity of antennas included in the multi-link device is not limited in this embodiment of this application.

In this application, the non-AP MLD has a wireless transceiver function, can support the 802.11 series protocol, and can communicate with the AP MLD, another non-AP MLD, or a single-link device. For example, the non-AP MLD may be any user communication device that allows a user to communicate with an AP and further communicate with a WLAN, including but not limited to, user equipment that can be connected to a network, for example, a tablet computer, a desktop computer, a laptop computer, a notebook computer, an ultra-mobile personal computer (ultra-mobile personal computer, UMPC), a handheld computer, a netbook, a personal digital assistant (personal digital assistant, PDA), or a mobile phone, an internet of things node in the internet of things, or a vehicle-mounted communication apparatus in the internet of vehicles. Optionally, the non-AP MLD may alternatively be a chip and a processing system in the foregoing terminals.

In this application, the AP MLD is an apparatus that provides a service for the non-AP MLD, and may support the 802.11 series protocols. For example, the AP MLD may be a communication entity, for example, a communication server, a router, a switch, or a bridge, or the AP MLD may include a macro base station, a micro base station, a relay station, and the like in various forms. Certainly, the AP MLD may alternatively be a chip and a processing system in the devices in the various forms. In this way, the method and functions in embodiments of this application are implemented.

For example, FIG. 1B is a specific implementation of a communication system according to this application. It is assumed that the AP MLD includes a base station 1 and a base station 2, and the non-AP MLD includes a terminal 1 and a terminal 2. The base station 1 is associated with the terminal 1, and communicates with the terminal 1 on a link (link) 1. The base station 2 is associated with the terminal 2, and communicates with the terminal 2 on a link 2.

In addition, the multi-link device can support high-rate and low-latency transmission. With continuous evolution of application scenarios of wireless local area networks, the multi-link device may be further applied to more scenarios, for example, a sensor node (for example, a smart water meter, a smart electricity meter, and a smart air detection node) in a smart city, a smart device (for example, a smart camera, a projector, a display, a television, a speaker, a refrigerator, and a washing machine) in a smart home, a node in an internet of things, an entertainment terminal (for example, a wearable device like an AR device and a VR device), a smart device (for example, a printer or a projector) in a smart office, an internet of vehicles device in an internet of vehicles, and some infrastructures (for example, a vending machine, a self-service navigation console in a supermarket, a self-service cash register, and a self-service ordering machine) in a daily life scenario. In this embodiment of this application, specific forms of the AP MLD and the non-AP MLD are not specially limited, and are merely examples for description herein. The 802.11 protocol may be a protocol that supports 802.11be or is compatible with 802.11be.

### 3. MLD communication model that uses a low-frequency link and a millimeter wave link

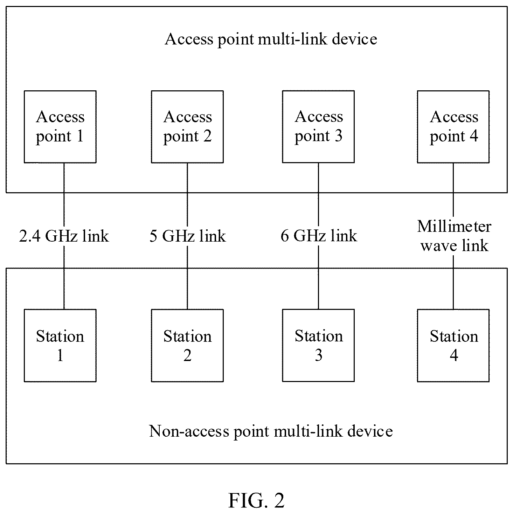

Currently, it is proposed to add a millimeter wave link (also referred to as a high-frequency link) to a current MLD. For example, FIG. 2 is an MLD communication model that includes a low-frequency link and a millimeter wave link. The communication model includes two parts: an AP MLD and a non-AP MLD. The AP MLD includes a maximum of four AP stations, the non-AP MLD may include four non-AP stations, and the four AP stations and the four non-AP stations separately operate on a 2.4 GHz link, a 5 GHz link, a 6 GHz link, and a millimeter wave link. The MLD communication model may also include any two of the foregoing four links. When at least one of the included plurality of links is a millimeter wave link, the MLD device may perform data transmission by utilizing a millimeter wave.

In a possible implementation, after the millimeter wave link is blocked, the MLD may use the low-frequency link to assist the millimeter wave link in data transmission and link recovery. A specific implementation may include but is not limited to the following manners.
(1) Manner 1: After the millimeter wave link is blocked, the low-frequency link is woken up to perform data transmission, and new beamforming training (beamforming training, BFT) is scheduled on the low-frequency link.

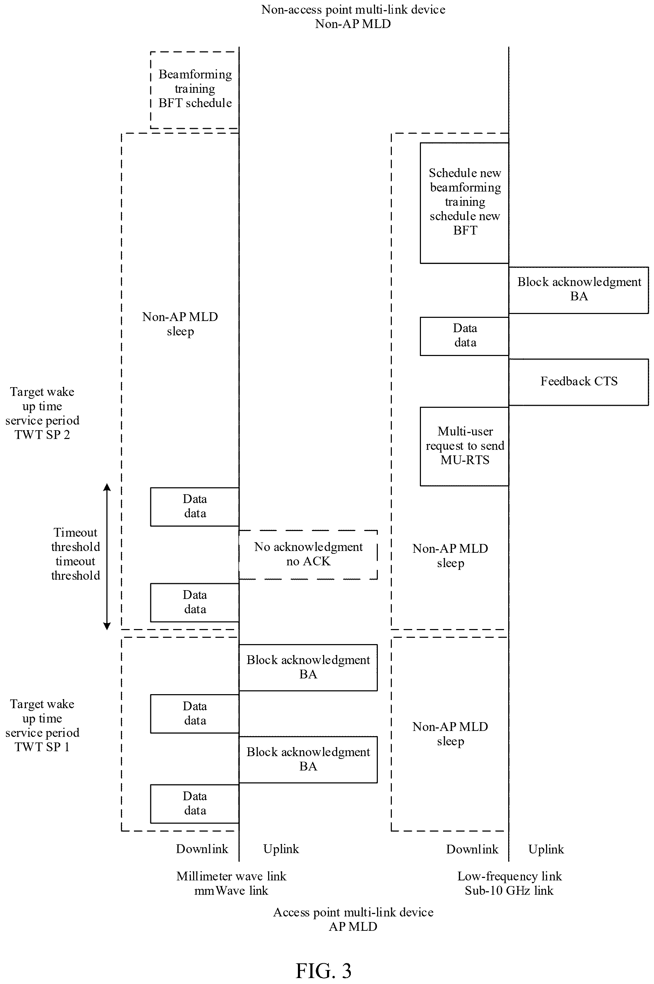

For example, FIG. 3 is a diagram in which a low-frequency link assists a millimeter wave link in data transmission and link recovery. In FIG. 3, for example, the AP MLD performs downlink transmission to the non-AP MLD. It is assumed that BFT is completed on the millimeter wave link, and the AP MLD starts downlink data transmission on the millimeter wave link. Optionally, before data transmission, the MLD device may set a target wake time service period (target wake time service period, TWT SP) on the millimeter wave link, for example, a TWT SP 1 in FIG. 3, and set a TWT SP on a low-frequency link (including a 2.4 GHz link, a 5 GHz link, and a 6 GHz link, which may be collectively referred to as links below 10 GHz or links below 7 GHz) to use the link as a backup link, so that after the millimeter wave link is blocked, data can be quickly switched to the low-frequency link for transmission.

To save power, when the data is transmitted on the millimeter wave link (the millimeter wave link of the non-AP MLD is in an active state), the low-frequency link of the non-AP MLD is in a sleep state. After the TWT SP 1 ends, if data transmission is not completed, the MLD device further separately set a TWT SP 2 on the millimeter wave link and the low-frequency link, and continues to perform data transmission on the millimeter wave link until the high-frequency link is blocked. For example, a method for determining whether the millimeter wave link is blocked may be as follows: After a transmitter of the millimeter wave link sends data, the transmitter receives no acknowledgment information, and a receiver of the millimeter wave link does not receive data information within a period of time (for example, a preset timeout threshold (timeout threshold)). In this case, the receiver and the transmitter of the millimeter wave link may determine that the millimeter wave link is blocked. After the millimeter wave link is blocked, to save power, the millimeter wave link of the non-AP MLD enters a sleep state, and the low-frequency link of the non-AP MLD changes from a sleep state to an active state. On the low-frequency link, multi-user request to send (multi-user request to send, MU-RTS) is sent via downlink, and a feedback (clear to send, CTS) is sent via uplink, to protect data transmission from being affected by a hidden node. After data transmission is performed for a period of time, on the low-frequency link, schedule new beamforming training (schedule new BFT) information is sent via downlink, and after the TWT SP 2 ends, new beamforming training is performed on the millimeter wave link based on the schedule new BFT information on the low-frequency link.

In Manner 1, after the millimeter wave link is blocked, the MLD device may indicate, on the low-frequency link, the millimeter wave link to perform beamforming training again, to implement link recovery. However, after blocking of the millimeter wave link ends, if a location of the non-AP MLD does not move (for example, blocking ends in a very short time), the MLD device may directly recover the link by using a BF configuration used before the link is blocked. In this case, if beamforming training is directly performed again, time is wasted, and transmission efficiency is reduced.

Manner 2: After the millimeter wave link is blocked, the low-frequency link is woken up to perform data transmission, and recommended lower modulation and code scheme (recommend lower MCS (modulation and code scheme)) information is sent on the low-frequency link.

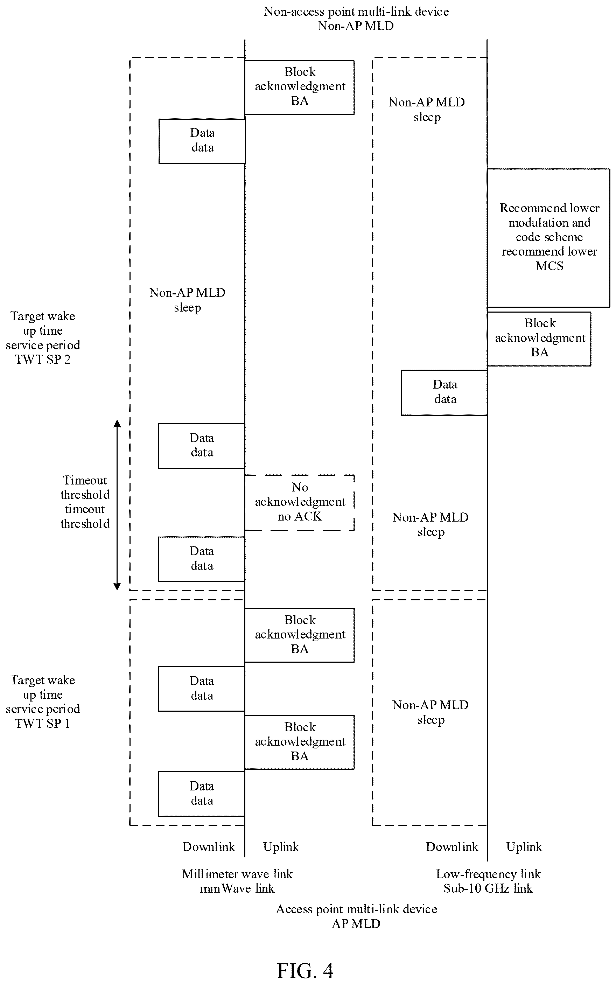

For example, FIG. 4 is another diagram in which a low-frequency link assists a millimeter wave link in data transmission and link recovery. An overall procedure thereof is similar to that in FIG. 3. Refer to descriptions corresponding to FIG. 3. Details are not described herein again. However, in comparison with FIG. 3, in FIG. 4, after the millimeter wave link is blocked, the non-AP MLD sends the recommend lower MCS information to the AP MLD via uplink on the low-frequency link, to indicate the AP MLD to send data on the millimeter wave link by using a lower MCS.

In Manner 2, after the millimeter wave link is blocked, the MLD device may indicate, on the low-frequency link, the millimeter wave link to perform transmission by using the lower MCS, to implement link recovery. However, even if the lower MCS is used, the millimeter wave link may still fail to be recovered and fail to perform data transmission, reducing transmission efficiency.

### II. Multi-link data processing method provided in this application

1. First indication information indicates to perform link recovery by using a beam configuration parameter used before disconnection of a first link.

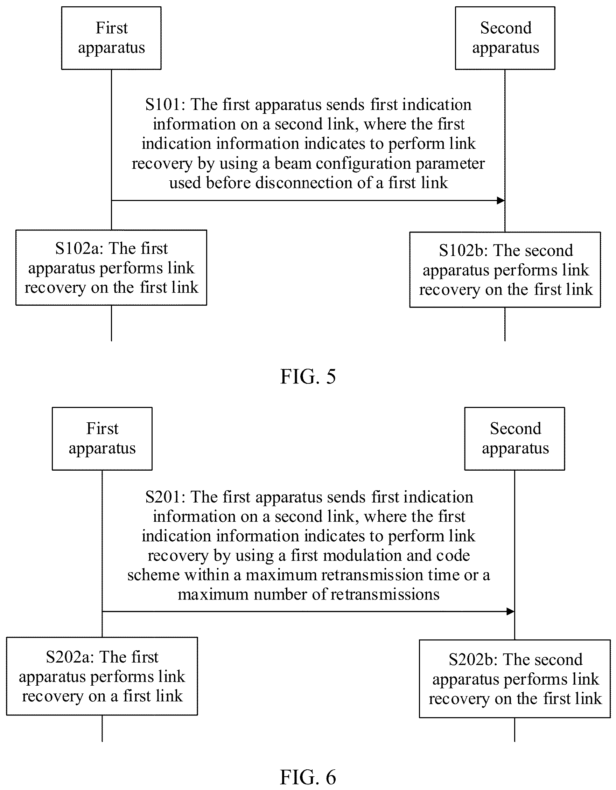

FIG. 5 is a schematic flowchart of a multi-link data processing method according to this application. The multi-link data processing method may be applied to the communication system shown in FIG. 1A, FIG. 1B, and FIG. 2. For example, the multi-link data processing method may be implemented through interaction between a first apparatus and a second apparatus. The first apparatus may be a transmitter or an apparatus that can implement a data sending and processing function, and the second apparatus may be a receiver or an apparatus that can implement a data receiving and processing function. For example, in downlink data transmission, the first apparatus is an access point multi-link device, and the second apparatus is a non-access point multi-link device; or in uplink data transmission, the first apparatus is a non-access point multi-link device, and the second apparatus is an access point multi-link device. The multi-link data processing method includes the following steps.

S101: The first apparatus sends the first indication information on a second link, where the first indication information indicates to perform link recovery by using the beam configuration parameter used before disconnection of the first link. Correspondingly, the second apparatus receives the first indication information on the second link.

The second link is a low-frequency link. In other words, the second link is a link below 10 GHz or a link below 7 GHz. For example, the second link may be a link on 2.4 GHz, a link on 5 GHz, or a link on 6 GHz. The first link is a millimeter wave (mmWave) link. For example, the first link may be a link above 10 GHz. It may be understood that an operating frequency of the second link is lower than an operating frequency of the first link.

Specifically, when the first indication information indicates to perform link recovery by using the beam configuration parameter used before disconnection of the first link, it indicates that the first indication information indicates an MLD device to attempt link recovery on a millimeter wave link by using a BF parameter used before disconnection of the millimeter wave link, instead of directly performing BFT again after disconnection of the millimeter wave link. Link recovery (recovery) may also be referred to as link reconstruction (reconstruction), or referred to as link reconnection (reconnection). For example, in downlink data transmission, the first apparatus may send the first indication information on the low-frequency link, to indicate the second apparatus to perform link recovery by using the beam configuration parameter used before disconnection of the first link, instead of indicating the second apparatus to schedule new BFT.

In a possible implementation, the first indication information is included in a data frame, or the first indication information is a management frame or a control frame. For example, the first indication information may be transmitted in a form of management frame, or in a form of control frame, or in a form of data frame piggyback. The management frame or the control frame may be a management frame or a control frame newly designed in this application, different from an existing management frame or control frame. The data frame may reuse an existing data frame, and the first indication information is included in the existing data frame. Optionally, the management frame or the control frame may also be a management frame or a control frame reused from an existing management frame or control frame, and the first indication information is included by adding a new field.

S102a: The first apparatus performs link recovery on the first link.

S102b: The second apparatus performs link recovery on the first link.

Both the first apparatus and the second apparatus may perform link recovery on the first link based on the first indication information. For example, the first apparatus performs link recovery on the first link by using the beam configuration parameter used before disconnection of the first link, and the second apparatus performs link recovery on the first link by using the beam configuration parameter used before disconnection of the first link.

In a possible implementation, if link recovery is successfully performed by using the beam configuration parameter used before disconnection of the first link, the first apparatus and the second apparatus may directly switch to the millimeter wave link to perform data transmission. Compared with scheduling new BFT and then performing data transmission, this may save time and improve transmission efficiency.

In a possible implementation, the first apparatus may further configure a constraint condition, so that the first apparatus or the second apparatus performs link recovery by using the beam configuration parameter used before disconnection of the first link under the constraint condition. Configuring the constraint condition may include but is not limited to configuring a maximum retransmission time, configuring a maximum number of retransmissions, and the like. The maximum retransmission time indicates a maximum value of duration for performing link recovery on the first link. The maximum retransmission time is predefined in a protocol or is determined through negotiation between the first apparatus and the second apparatus (for example, an access point and a non-access point). For example, within the maximum retransmission time, the first apparatus and the second apparatus may perform link recovery on the first link by using the beam configuration parameter used before disconnection of the first link. If the first link is successfully recovered within the maximum retransmission time, the first apparatus and the second apparatus may switch from the second link to the first link to perform data transmission. For another example, within the maximum number of retransmissions, the first apparatus and the second apparatus may perform link recovery on the first link by using the beam configuration parameter used before disconnection of the first link. If the first link is successfully recovered within the maximum number of retransmissions, the first apparatus and the second apparatus may switch from the second link to the first link to perform data transmission.

Optionally, S102a and S102b are similar operations performed by different apparatuses, and there is no sequence of performing S102a and S102b. For example, S102a may be performed before S102b, S102b may be performed before S102a, or S102a and S102b may be performed simultaneously. This is not limited in this embodiment.

In this embodiment, when the millimeter wave link is blocked and disconnected, the first apparatus may indicate, based on the first indication information, the transmitter and the receiver of the data to attempt to perform link recovery on the first link by using the beam configuration parameter used before disconnection of the first link, instead of directly performing beamforming training again on the first link. If link recovery succeeds, beamforming training does not need to be performed again, to avoid a waste of time, so as to improve data transmission efficiency.

2. First indication information indicates to perform link recovery by using a first modulation and code scheme within a maximum retransmission time or a maximum number of retransmissions.

FIG. 6 is a schematic flowchart of another multi-link data processing method according to this application. The multi-link data processing method may be applied to the communication system shown in FIG. 1A, FIG. 1B, and FIG. 2. For example, the multi-link data processing method may be implemented through interaction between a first apparatus and a second apparatus. The multi-link data processing method includes the following steps.

S201: The first apparatus sends the first indication information on a second link, where the first indication information indicates to perform link recovery by using the first modulation and code scheme within the maximum retransmission time or the maximum number of retransmissions. Correspondingly, the second apparatus receives the first indication information.

A modulation order of the first modulation and code scheme is less than a modulation order of a second modulation and code scheme, and/or a code rate of the first modulation and code scheme is less than a code rate of the second modulation and code scheme. The second modulation and code scheme is a modulation and code scheme used before disconnection of the first link. In other words, within the maximum retransmission time or the maximum number of retransmissions, the first apparatus and the second apparatus may attempt to perform link recovery by using a lower modulation and code scheme. For example, if the first modulation and code scheme includes a modulation order 4 (for example, 16 quadrature amplitude modulation (quadrature amplitude modulation, QAM) is used) and a code rate 340, the second modulation and code scheme may be designed to include a modulation order 2 (for example, quadrature phase shift keying (quadrature phase shift keying, QPSK) is used) and a code rate 120. Within the maximum retransmission time or the maximum number of retransmissions, the first apparatus and the second apparatus may use a code scheme including a modulation scheme of QPSK and a code rate 120 to perform link recovery on the first link.

Specifically, when the first indication information indicates to perform link recovery by using the first modulation and code scheme within the maximum retransmission time or the maximum number of retransmissions, it indicates that the first indication information indicates an MLD device to attempt link recovery on a millimeter wave link by using the lower modulation and code scheme within a limited time or quantity of times after disconnection of the millimeter wave link. The first link cannot be recovered even if the lower modulation and code scheme is used. The embodiment defines the maximum retransmission time and the maximum number of retransmissions, so that the first apparatus and the second apparatus may perform a limited quantity of attempts. If the first link cannot be recovered, another operation (for example, performing beamforming training again) can be performed as soon as possible, to improve transmission efficiency.

Optionally, for specific descriptions that in S201, the first link, the second link, and the first indication information are included in a data frame, or the first indication information is a management frame, a control frame, or the like, refer to corresponding descriptions in S101. Details are not described herein again.

S202a: The first apparatus performs link recovery on the first link.

S202b: The second apparatus performs link recovery on the first link.

For a specific implementation of S202a and S202b, refer to corresponding descriptions in S102a and S102b. Details are not described herein again.

In this embodiment, when the millimeter wave link is blocked and disconnected, the first apparatus may indicate, based on the first indication information, a transmitter and a receiver of data to attempt link recovery on the first link by using the lower modulation and code scheme within a preset time or a preset maximum quantity of times, instead of directly performing beamforming training again on the first link. If link recovery succeeds, beamforming training does not need to be performed again, to avoid a waste of time. If the link cannot be recovered even by using the lower modulation and code scheme, because the maximum retransmission time or the maximum number of retransmissions is set, the first apparatus may perform beamforming training again on the first link as soon as possible after attempting fails, to improve data transmission efficiency.

### III. Specific implementations of different first indication information in a multi-link data processing method provided in this application

1. Example 1: Link recovery is performed by using a beam configuration parameter used before disconnection of a first link under a constraint of a maximum number of retransmissions.

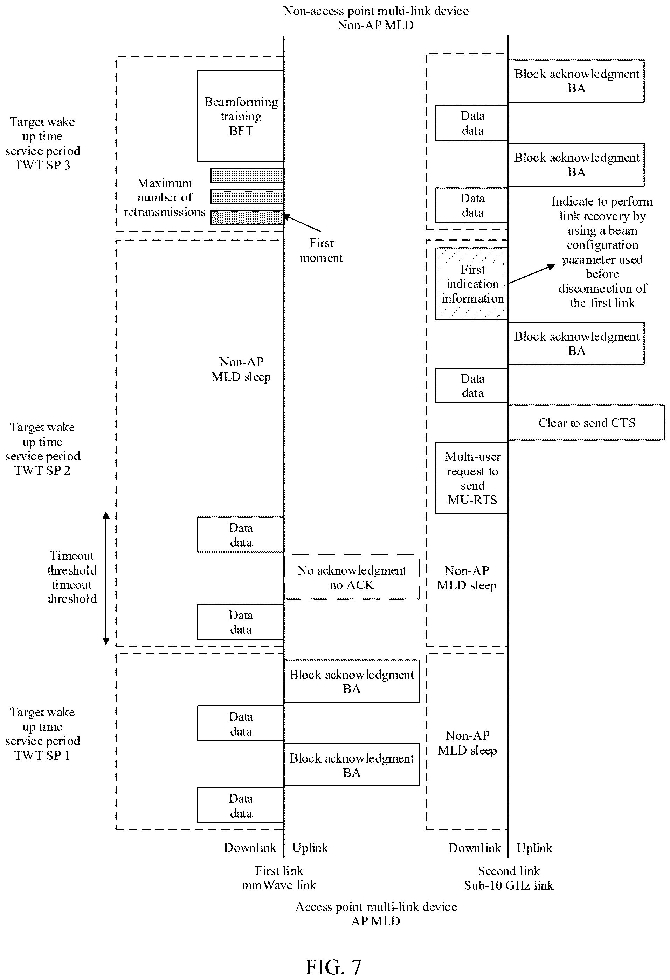

For example, FIG. 7 is a diagram of performing link recovery by using a beam configuration parameter used before disconnection of a first link under a constraint of a maximum number of retransmissions according to this application. FIG. 7 is described by using an example in which an AP MLD performs downlink transmission to a non-AP MLD. It is assumed that BFT is completed on a millimeter wave link, and a target wake time service period is configured on both the first link and a second link. For example, a first service period (for example, a TWT SP 3 shown in FIG. 7) is configured on both the first link and the second link. A start moment of the first service period is a first moment. The first moment is a specified moment at which a transmitter and a receiver of the first link are synchronized after disconnection of the first link (in other words, both a first apparatus and a second apparatus know the first moment, and may attempt to perform link recovery from the first moment), for example, at the first moment in FIG. 7. The first service period is a newly set TWT SP in this application. In the TWT SP, the first apparatus and the second apparatus may attempt to perform link recovery on the first link. Optionally, similar to FIG. 3, a TWT SP 1 is configured on both the first link and the second link in FIG. 7, so that when the millimeter wave link is blocked, data can be quickly switched to a low-frequency link for transmission.

To save power, when data is transmitted on the first link (the millimeter wave link of the non-AP MLD is in an active state), the low-frequency link of the non-AP MLD is in a sleep state. After the TWT SP 1 ends, if data transmission is not completed, a TWT SP 2 is further configured on the first link and the second link separately, and data continues to be transmitted on the first link until the first link is blocked. For example, a method for determining whether the first link is blocked may be as follows: After the AP MLD sends data on the first link, the AP MLD receives no acknowledgment information (no ACK); or the non-AP MLD receives no data within a period of time (for example, a preset timeout threshold (timeout threshold)). In this case, the AP MLD and the non-AP MLD may determine that the first link is blocked. After the AP MLD and the non-AP MLD identify that the first link is blocked, to save power, the first link of the non-AP MLD enters a sleep state, and the second link of the non-AP MLD changes from a sleep state to an active state.

After the second link changes to an active state, multi-user request to send (multi-user request to send, MU-RTS) is sent via downlink, and clear to send (clear to send, CTS) is fed back via uplink, to protect data transmission from being affected by a hidden node. After data is transmitted for a period of time, the second link sends the first indication information via downlink, to indicate to perform link recovery by using the beam configuration parameter used before disconnection of the first link. The maximum number of retransmissions is further configured on the first link, and the maximum number of retransmissions indicates a maximum quantity of link recovery attempts performed on the first link. The maximum number of retransmissions is predefined in a protocol or determined through negotiation between an access point and a non-access point. In other words, the maximum number of retransmissions may be negotiated by the AP MLD and the non-AP MLD, or may be specified in the protocol. For example, the maximum number of retransmissions shown in FIG. 7 is three times. In other words, the maximum quantity of link recovery attempts performed on the first link is three times. After the TWT SP 2 ends, the AP MLD and the non-AP MLD attempt to perform link recovery on the first link based on the first indication information sent on the second link. For example, starting from the first moment, the AP MLD and the non-AP MLD attempt to perform link recovery on the mmWave link by using a BF parameter configuration used before the first link is blocked, as shown by gray blocks in FIG. 7. Each gray block indicates sending, once, information for attempting to reconnect (that is, sending a short data frame, a control frame, or a management frame once). In this case, based on a configured maximum number of retransmissions, a maximum of three gray blocks may be sent in FIG. 7 to attempt to perform link recovery. Each gray block may be a short data frame, a control frame, or a management frame. In other words, the AP MLD and the non-AP MLD perform link recovery on the first link by using the short data frame, the control frame, or the management frame.

If the first link is successfully recovered within the maximum number of retransmissions, the first link is directly switched to for data transmission. For example, in a downlink transmission scenario shown in FIG. 7, the AP MLD may switch to the first link to send data via downlink, and the non-AP MLD may switch to the first link to receive data via uplink. If the first link fails to be recovered after the maximum number of retransmissions, beamforming training is performed again on the first link. During attempting of recovering the first link, data transmission may be continuously performed on the second link, to ensure integrity of data transmission. The first indication information may be transmitted in a form of management frame, or in a form of control frame, or in a form of data frame piggyback. The first indication information may be sent by the AP MLD, or may be sent by the non-AP MLD.

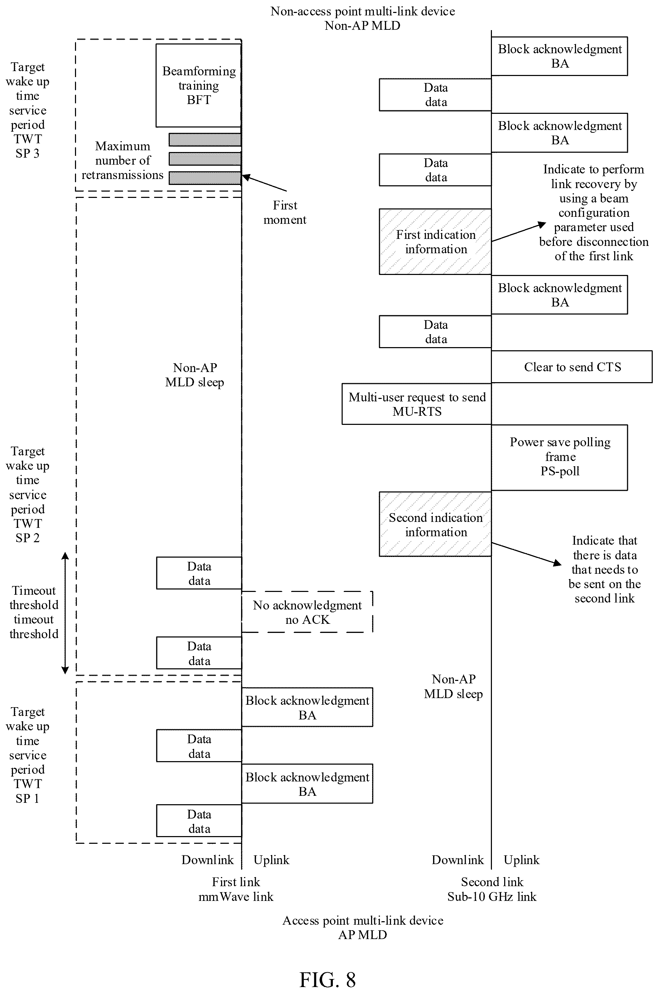

In a possible implementation, no TWT SP is configured on a second link, and only a TWT SP is configured on the first link. For example, FIG. 8 is another diagram of performing link recovery by using a beam configuration parameter used before disconnection of a first link under a constraint of a maximum number of retransmissions according to this application. FIG. 8 is still described by using an example in which an AP MLD performs downlink transmission to a non-AP MLD. Different from FIG. 7, no TWT SP is configured on the first link and the second link (for example, there is no TWT SP 1/TWT SP 2/TWT SP 3 on the second link in FIG. 8). When data is transmitted on the first link, the second link may be in a sleep state. After the first link is blocked, a first apparatus may send second indication information. The second indication information indicates, to a receiver, that there is data that needs to be sent on a link below 10 GHz or a link below 7 GHz at a transmitter. For example, the second indication information in FIG. 8 indicates, to the non-AP MLD, that there is data that needs to be sent on the second link on the AP MLD. Then, the second link switches from a sleep state to a wake-up state, and the receiver (for example, the non-AP MLD in FIG. 8) of the second link wakes up to perform channel contention. Channel contention may include one or more low-frequency links. In other words, a plurality of low-frequency links may wake up and perform channel contention, and the plurality of low-frequency links may separately send a power save polling (power save polling, PS-Poll) frame. Channel contention may be performed by a plurality of low-frequency links in different non-AP MLDs. For each non-AP MLD, one or more low-frequency links may participate in contention. After receiving a PS-Poll from a second link, the transmitter may send an MU-RTS on the second link via downlink, and the receiver returns a CTS. Then, data transmission may be performed on the second link. For example, after receiving the second indication information, the non-AP MLD in FIG. 8 participates in channel contention. If contention succeeds, the non-AP MLD sends a PS-Poll to the AP MLD on the second link via uplink. The AP MLD sends an MU-RTS via downlink, the non-AP MLD feeds back a CTS via uplink, and the non-AP MLD and the AP MLD switch to the second link to perform data transmission. For subsequent steps (for example, the AP MLD sends first indication information via downlink, and attempts to perform link recovery on the first link by using the beam configuration parameter used before disconnection of the first link), refer to corresponding descriptions in FIG. 7. Details are not described herein again.

In Example 1, the maximum number of retransmissions is further configured, to limit the transmitter and the receiver to attempting to perform link recovery within a specific quantity of times, instead of attempting to perform link recovery without limitation, so as to avoid a waste of time. This helps improve transmission efficiency.

2. Example 2: Link recovery is performed by using a beam configuration parameter used before disconnection of a first link under a constraint of a maximum retransmission time.

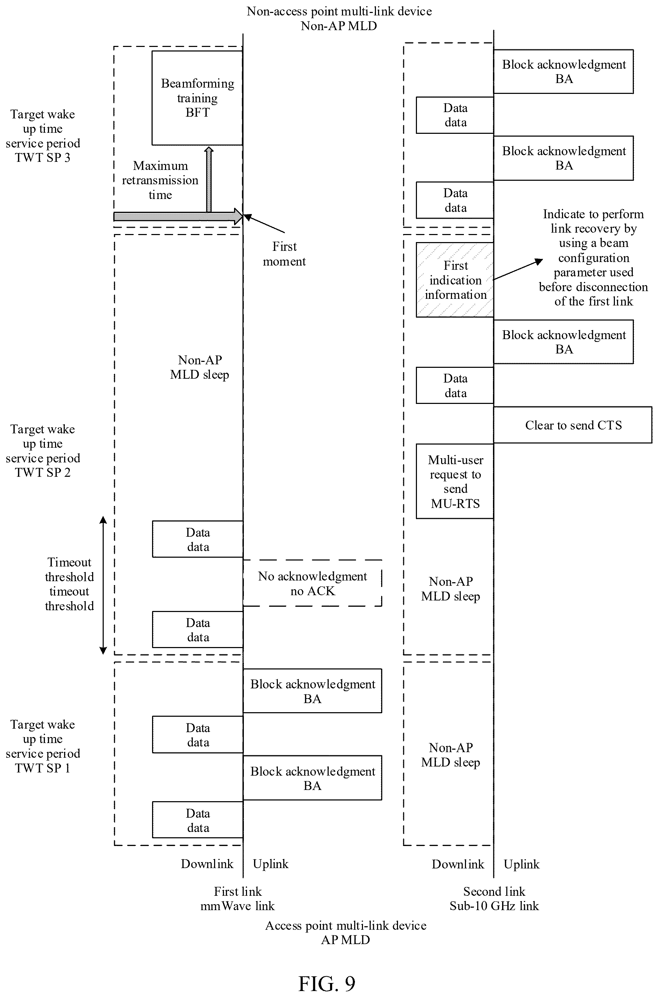

For example, FIG. 9 is a diagram of performing link recovery by using a beam configuration parameter used before disconnection of a first link under a constraint of a maximum retransmission time according to this application. FIG. 9 is described by using an example in which an AP MLD performs downlink transmission to a non-AP MLD. It is assumed that BFT is completed on a millimeter wave link, and a target wake time service period is configured on both the first link and a second link. For example, a TWT SP1/TWT SP2/TWT SP3 is configured on both the first link and the second link, as shown in FIG. 9.

Different from Example 1 described above, the first indication information sent via downlink on the second link does not limit a maximum number of retransmissions, but limits the maximum retransmission time. For example, the maximum retransmission time is further configured on the first link, and the maximum retransmission time indicates a maximum value of duration for performing link recovery on the first link. The maximum retransmission time is predefined in a protocol or determined through negotiation between an access point and a non-access point. In other words, the maximum retransmission time may be negotiated by the AP MLD and the non-AP MLD, or may be specified in the protocol. For example, the maximum retransmission time shown in FIG. 9 is duration of a gray arrow in the figure. After the TWT SP 2 ends, the AP MLD and the non-AP MLD attempt to perform link recovery on the first link based on the first indication information sent on the second link. For example, starting from a first moment, the AP MLD and the non-AP MLD attempt to perform link recovery on the mmWave link by using a BF parameter configuration used before the first link is blocked, as shown by the gray arrow in FIG. 9. The AP MLD and the non-AP MLD may attempt to perform link recovery within the maximum retransmission time. The AP MLD and the non-AP MLD perform link recovery on the first link by using a short data frame, a control frame, or a management frame.

If the first link is successfully recovered within the maximum retransmission time, the first link is directly switched to for data transmission. For example, in a downlink transmission scenario shown in FIG. 9, the AP MLD may switch to the first link to send data via downlink, and the non-AP MLD may switch to the first link to receive data via uplink. If the first link fails to be recovered after the maximum retransmission time, beamforming training is performed again on the first link. During attempting of recovering the first link, data transmission may be continuously performed on the second link, to ensure integrity of data transmission. The first indication information may be transmitted in a form of management frame, or in a form of control frame, or in a form of data frame piggyback. The first indication information may be sent by the AP MLD, or may be sent by the non-AP MLD.

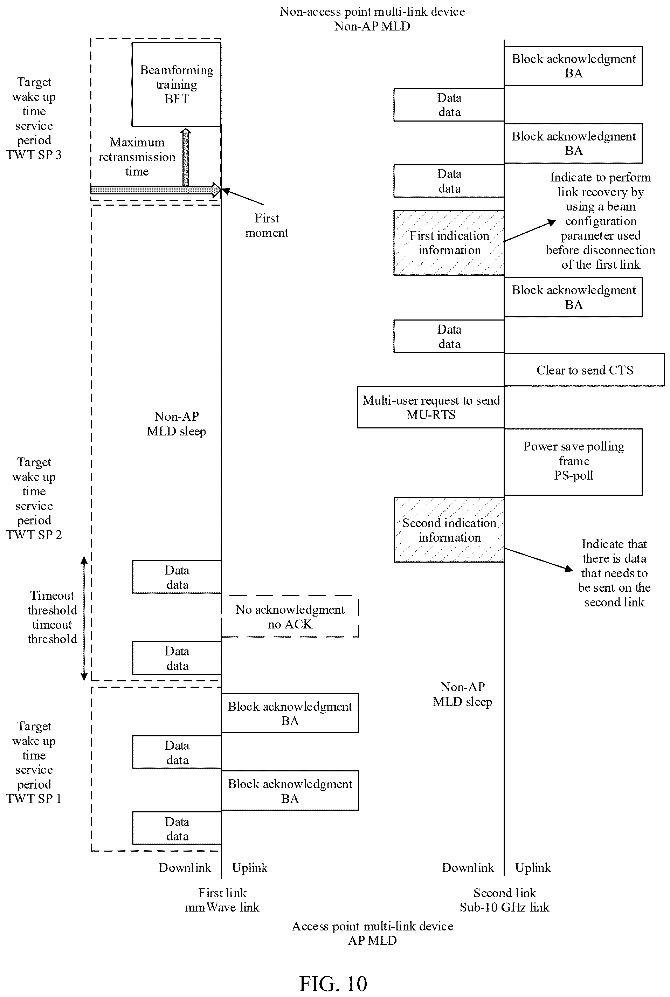

In a possible implementation, no TWT SP is configured on the second link, and only a TWT SP is configured on the first link. For example, FIG. 10 is another diagram of performing link recovery by using a beam configuration parameter used before disconnection of a first link under a constraint of a maximum number of retransmissions according to this application. FIG. 10 is still described by using an example in which an AP MLD performs downlink transmission to a non-AP MLD. Different from FIG. 9, no TWT SP is configured on the first link and the second link (for example, there is no TWT SP 1/TWT SP 2/TWT SP 3 on the second link in FIG. 10). When data is transmitted on the first link, the second link may be in a sleep state. After the first link is blocked, the first apparatus may send second indication information. The second indication information indicates, to a receiver, that there is data that needs to be sent on a link below 10 GHz or a link below 7 GHz at a transmitter. For example, the second indication information in FIG. 10 indicates, to the non-AP MLD, that there is data that needs to be sent on the second link on the AP MLD. Then, the second link switches from a sleep state to a wake-up state, and the receiver (for example, the non-AP MLD in FIG. 10) of the second link wakes up to perform channel contention. For a specific implementation of contention and subsequent steps (for example, the AP MLD sends the first indication information via downlink, and attempts to perform link recovery on the first link by using the beam configuration parameter used before disconnection of the first link), refer to corresponding descriptions in FIG. 7 and FIG. 8. Details are not described herein again.

In Example 2, the maximum retransmission time is further configured, to limit the transmitter and the receiver to attempting to perform link recovery within a specific time period, instead of attempting to perform link recovery without limitation, so as to avoid a waste of time. This helps improve transmission efficiency.

3. Example 3: Link recovery is performed by using a first modulation and code scheme under a constraint of a maximum number of retransmissions.

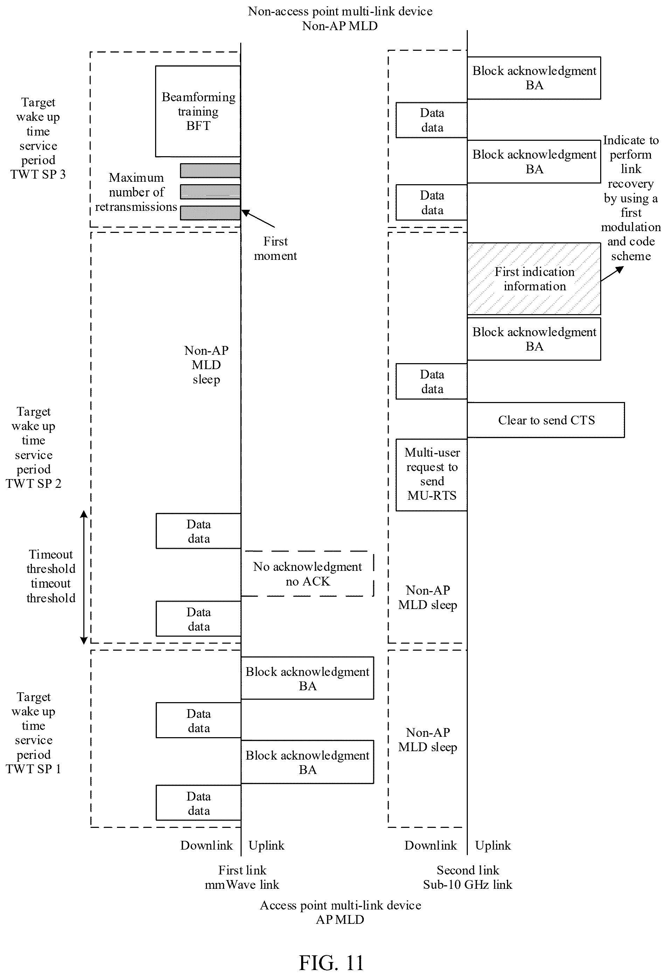

For example, FIG. 11 is a diagram of performing link recovery by using a first modulation and code scheme under a constraint of a maximum number of retransmissions according to this application.

FIG. 11 is described by using an example in which an AP MLD performs downlink transmission to a non-AP MLD. It is assumed that BFT is completed on a millimeter wave link, and a target wake time service period is configured on both a first link and a second link. For example, a TWT SP1/TWT SP2/TWT SP3 is configured on both the first link and the second link, as shown in FIG. 11.

Different from Example 1 described above, the first indication information indicates to perform link recovery by using the first modulation and code scheme within the maximum number of retransmissions, instead of performing link recovery by using a beam configuration parameter used before disconnection of the first link within the maximum number of retransmissions. For descriptions of the first modulation and code scheme, refer to corresponding descriptions in the foregoing embodiments. Details are not described herein again. For example, after disconnection of the first link, the non-AP MLD may send the first indication information via uplink on the second link, to indicate to perform link recovery on the first link by using the first modulation and code scheme within the maximum number of retransmissions. Starting from a first moment, the AP MLD and the non-AP MLD may send, on the first link within the maximum number of retransmissions, information for attempting to reconnect, to perform link recovery.

Different from Example 1 described above, in FIG. 11, each gray block may be a data frame of the first modulation and code scheme. In other words, the AP MLD and the non-AP MLD perform link recovery on the first link by using the data frame of the first modulation and code scheme.

If the first link is successfully recovered within the maximum number of retransmissions, the first link is directly switched to for data transmission. For specific implementations of other procedures in FIG. 11, refer to corresponding descriptions in Example 1. Details are not described herein again.

In a possible implementation, no TWT SP is configured on the second link, and only a TWT SP is configured on the first link. When data is transmitted on the first link, the second link may be in a sleep state. After the first link is blocked, a first apparatus may send second indication information. The second indication information indicates, to a receiver, that there is data that needs to be sent on a link below 10 GHz or a link below 7 GHz at a transmitter. For this implementation, refer to FIG. 11 and descriptions of FIG. 8 and the procedure there of. For example, the implementation includes: The AP MLD may send the second indication information via downlink on the second link, and after receiving the second indication information, the non-AP MLD participates in channel contention, and notifies the AP MLD via a PS-Poll. Details are not described herein again.

In Example 3, the maximum number of retransmissions is further configured, to limit the transmitter and the receiver to attempting to perform link recovery within a specific quantity of times, instead of attempting to perform link recovery without limitation. The link cannot be recovered even if a lower modulation and code scheme is used. Because the maximum number of retransmissions is set, the method can perform BFT on the first link again as soon as possible. This helps improve transmission efficiency.

4. Example 4: Link recovery is performed by using a first modulation and code scheme under a constraint of a maximum retransmission time.

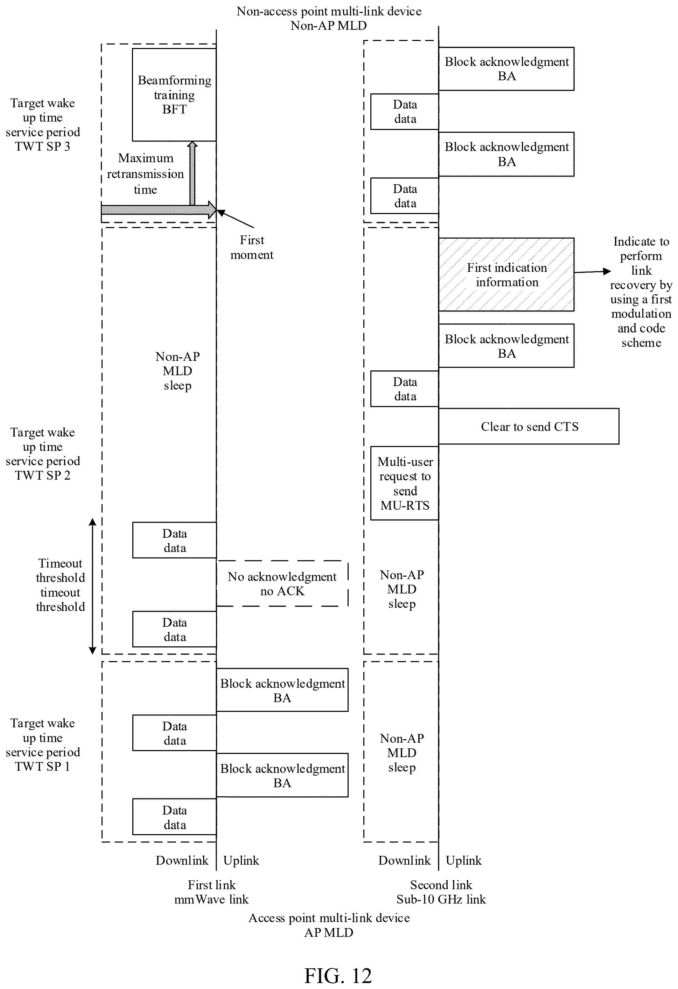

For example, FIG. 12 is a diagram of performing link recovery by using a first modulation and code scheme under a constraint of a maximum retransmission time according to this application.

FIG. 12 is described by using an example in which an AP MLD performs downlink transmission to a non-AP MLD. It is assumed that BFT is completed on a millimeter wave link, and a target wake time service period is configured on both a first link and a second link. For example, a TWT SP1/TWT SP2/TWT SP3 is configured on both the first link and the second link, as shown in FIG. 12.

Different from Example 2 described above, the first indication information indicates to perform link recovery by using the first modulation and code scheme within the maximum retransmission time, instead of performing link recovery by using a beam configuration parameter used before disconnection of the first link within the maximum retransmission time. For descriptions of the first modulation and code scheme, refer to corresponding descriptions in the foregoing embodiments. Details are not described herein again. For example, after disconnection of the first link, the non-AP MLD may send the first indication information via uplink on the second link, to indicate to perform link recovery on the first link by using the first modulation and code scheme within the maximum retransmission time. Starting from a first moment, the AP MLD and the non-AP MLD may send, on the first link within the maximum retransmission time, information for attempting to reconnect, to perform link recovery.

Different from Example 2, in FIG. 12, a data frame of the first modulation and code scheme is used to attempt to perform link recovery within the maximum retransmission time. In other words, the AP MLD and the non-AP MLD perform link recovery on the first link by using the data frame of the first modulation and code scheme.

If the first link is successfully recovered within a maximum number of retransmissions, the first link is directly switched to for data transmission. For specific implementations of other procedures in FIG. 12, refer to corresponding descriptions in Example 2. Details are not described herein again.

In a possible implementation, no TWT SP is configured on the second link, and only a TWT SP is configured on the first link. When data is transmitted on the first link, the second link may be in a sleep state. After the first link is blocked, a first apparatus may send second indication information. The second indication information indicates, to a receiver, that there is data that needs to be sent on a link below 10 GHz or a link below 7 GHz at a transmitter. For this implementation, refer to FIG. 12 and descriptions of FIG. 10 and the procedure there of. For example, the implementation includes: The AP MLD may send the second indication information via downlink on the second link, and after receiving the second indication information, the non-AP MLD participates in channel contention, and notifies the AP MLD via a PS-Poll. Details are not described herein again.

In Example 4, the maximum retransmission time is further configured, to limit the transmitter and the receiver to attempting to perform link recovery within a specific time period, instead of attempting to performing link recovery without limitation. The link cannot be recovered even if a lower modulation and code scheme is used. Because the maximum retransmission time is set, the method can perform BFT on the first link again as soon as possible. This helps improve transmission efficiency.

In conclusion, Example 1 to Example 4 are described by using a downlink transmission procedure as an example. However, the multi-link data processing method provided in this application is also applicable to uplink transmission, and a corresponding procedure may be obtained through adaptive modification.

### IV. Field design of first indication information in a multi-link data processing method provided in this application

1. Example 1: The first indication information is included in one field.

The first indication information may be included in a first field. The first field is used to indicate to perform beamforming training again on a first link or indicate to perform link recovery and then perform beamforming training again after link recovery fails. In other words, the first field may indicate not to attempt to perform link recovery, but to directly perform BFT again (for example, the solution shown in FIG. 3), or may indicate to perform link recovery and then perform beamforming training again after link recovery fails (for example, the solution provided in this application), and this is implemented by using different values of the first field. In this implementation, an existing field may be reused for indication, or a new field may be designed for indication. This is not limited in this application.

In a possible implementation, when the first indication information indicates to perform link recovery by using a beam configuration parameter used before disconnection of the first link, the first indication information is included in a first field shown in Table 1.

**Table 1: Value of a first field and a meaning of the value**

| Value of the first field (1 bit) | Meaning |
|---|---|
| 0 | Perform no attempt, but directly perform BFT |
| 1 | First attempt to perform link recovery by using a short data frame, a control frame, or a management frame, and then if link recovery fails, perform BFT |

In a possible implementation, when the first indication information indicates to perform link recovery by using a first modulation and code scheme within a maximum retransmission time or a maximum number of retransmissions, the first indication information is included in another first field shown in Table 2.

**Table 2: Value of another first field and a meaning of the value**

| Value of the first field (1 bit) | Meaning |
|---|---|
| 0 | Perform no attempt, but directly perform BFT |
| 1 | Attempt to perform link recovery by using a data frame of the first modulation and code scheme, and if link recovery fails, perform BFT |

2. Example 2: The first indication information is included in two fields.

The first indication information may be included in a combination of a first field and a second field. The combination of the first field and the second field is used to indicate to perform beamforming training on a first link, indicate to perform link recovery and not to perform beamforming training, or indicate to perform link recovery and then perform beamforming training again after link recovery fails. In other words, the combination of the first field and the second field may indicate not to attempt to perform link recovery, but to directly perform BFT again (for example, the solution shown in FIG. 3), or may indicate to perform link recovery and then perform beamforming training again after link recovery fails (for example, the solution provided in this application), or may indicate to attempt to perform only link recovery, and not to perform beamforming training regardless of whether attempting succeeds or fails, and this is implemented by using different values of the combination of the first field and the second field. In this implementation, an existing field may be reused for indication, or a new field may be designed for indication. This is not limited in this application.

In a possible implementation, when the first indication information indicates to perform link recovery by using a beam configuration parameter used before disconnection of the first link, the first indication information is included in a combination of the first field and the second field shown in Table 3.

**Table 3: Value of a combination of the first field and the second field and a meaning of the value**

| Value of the first field (1 bit) | Value of the second field (1 bit) | Meaning |
|---|---|---|
| 0 | 0 | Reserved |
| | | reserved |
| 0 | 1 | Perform no attempt, but directly perform BFT |
| 1 | 0 | Perform only attempt, and perform no BFT |
| 1 | 1 | First attempt to perform link recovery by using a short data frame, a control frame, or a management frame, and then if link recovery fails, perform BFT |

In a possible implementation, when the first indication information indicates to perform link recovery by using a first modulation and code scheme within a maximum retransmission time or a maximum number of retransmissions, the first indication information is included in another combination of the first field and the second field shown in Table 4.

**Table 4: Value of another combination of the first field and the second field and a meaning of the value**

| Value of the first field (1 bit) | Value of the second field (1 bit) | Meaning |
|---|---|---|
| 0 | 0 | Reserved |
| | | reserved |
| 0 | 1 | Perform no attempt, but directly perform BFT |
| 1 | 0 | Perform attempt using only a data frame, and perform no BFT |
| 1 | 1 | Attempt to perform link recovery by using a data frame of the first modulation and code scheme, and if link recovery fails, perform BFT |

Optionally, if the maximum number of retransmissions or the maximum retransmission time is predefined in a protocol, no additional field needs to be set. If the maximum number of retransmissions or the maximum retransmission time is determined through negotiation between an AP MLD and a non-AP MLD, an additional field needs to be set. For example, when the additional field needs to be set to indicate the maximum number of retransmissions or the maximum retransmission time, an additional field column (for example, a third field) may be added to Table 1 to Table 4 to indicate the maximum number of retransmissions or the maximum retransmission time. For example, Table 1 may be updated to Table 5.

**Table 5: Value of the extended first field and a meaning of the value**

| Value of the first field (1 bit) | Meaning | Value of the third field (1 bit) | Meaning |
|---|---|---|---|
| 0 | Perform no attempt, but directly perform BFT | 0/1 | Reserved bit |
| 1 | First attempt to perform link recovery by using a short data frame, a control frame, or a management frame, and then if link recovery fails, perform BFT | 0 | Maximum retransmission time |
| | | 1 | Maximum number of retransmissions |

In the foregoing two examples, two different field indication manners are defined, so that a receiver and a transmitter can be efficiently indicated to use the second link to assist the first link in link recovery.

To implement functions in the method provided in this application, the apparatus or the device provided in this application may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions. In this application, module division is an example, and is merely a logical function division. In practice, another division manner may be used. In addition, functional modules in embodiments of this application may be integrated into one processor, or may exist alone physically, or two or more modules may be integrated into one module. The integrated module may be implemented in a form of hardware, or may be implemented in a form of software functional module.

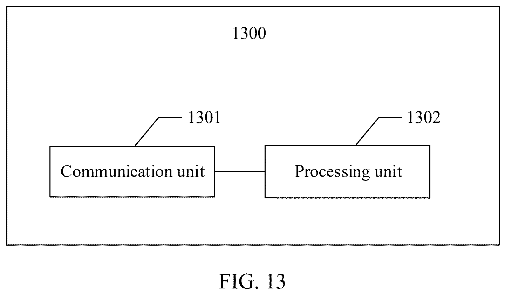

FIG. 13 is a diagram of an apparatus 1300 according to this application. The apparatus may include a one-to-one corresponding module for performing the methods/operations/steps/actions described in the method embodiments corresponding to FIG. 5 to FIG. 12. The module may be a hardware circuit, may be software, or may be implemented by a combination of a hardware circuit and software.

In an implementation, the apparatus includes a communication unit 1301 and a processing unit 1302, configured to implement the method performed by the first apparatus in the foregoing embodiments. For example, in downlink data transmission, the first apparatus is an access point multi-link device, or in uplink data transmission, the first apparatus is a non-access point multi-link device. The communication unit 1301 is configured to send first indication information on a second link, where the first indication information indicates to perform link recovery by using a beam configuration parameter used before disconnection of a first link. The processing unit 1302 is configured to perform link recovery on the first link.

For a specific execution procedure of the communication unit 1301 and the processing unit 1302 in this example, refer to the detailed descriptions of the steps performed by the first apparatus in the foregoing invention content and the specific implementations. Details are not described herein again. In the method implemented by the apparatus, after a millimeter wave link is blocked and disconnected, the first indication information indicates a transmitter and a receiver of data to attempt to perform link recovery on the first link, instead of directly performing beamforming training again on the first link, to avoid a waste of time. Therefore, the method can assist in quick link recovery of the disconnected first link, to help improve data transmission efficiency.

In an implementation, the communication unit 1301 is configured to send first indication information, where the first indication information indicates to perform link recovery by using a first modulation and code scheme within a maximum retransmission time or a maximum number of retransmissions. A modulation order of the first modulation and code scheme is less than a modulation order of a second modulation and code scheme, and/or a code rate of the first modulation and code scheme is less than a code rate of the second modulation and code scheme; and the second modulation and code scheme is a modulation and code scheme used before disconnection of the first link. The processing unit 1302 is configured to perform link recovery on the first link.

For a specific execution procedure of the communication unit 1301 and the processing unit 1302 in this example, refer to the detailed descriptions of the steps performed by the first apparatus in the foregoing invention content and the specific implementations. Details are not described herein again. In the method implemented by the apparatus, after a millimeter wave link is blocked and disconnected, the first indication information indicates a transmitter and a receiver of data to attempt to perform link recovery on the first link, instead of directly performing beamforming training again on the first link, to avoid a waste of time. Therefore, the method can assist in quick link recovery of the disconnected first link, to help improve data transmission efficiency.

In an implementation, the apparatus includes a communication unit 1301 and a processing unit 1302. The communication unit 1301 is configured to receive first indication information on a second link, where the first indication information indicates to perform link recovery by using a beam configuration parameter used before disconnection of a first link. The processing unit 1302 is configured to perform link recovery on the first link.

For a specific execution procedure of the communication unit 1301 and the processing unit 1302 in this example, refer to the detailed descriptions of the steps performed by the second apparatus in the foregoing invention content and the specific implementations. Details are not described herein again. In the method implemented by the apparatus, after a millimeter wave link is blocked and disconnected, the first indication information is received, so that the receiver may attempt to perform link recovery on the first link, instead of directly performing beamforming training again on the first link, to avoid a waste of time. Therefore, the method can assist in quick link recovery of the disconnected first link, to help improve data transmission efficiency.

In an implementation, the apparatus includes a communication unit 1301 and a processing unit 1302. The communication unit 1301 is configured to receive first indication information on a second link, where the first indication information indicates to perform link recovery by using a first modulation and code scheme within a maximum retransmission time or a maximum number of retransmissions; a modulation order of the first modulation and code scheme is less than a modulation order of a second modulation and code scheme, and/or a code rate of the first modulation and code scheme is less than a code rate of the second modulation and code scheme; and the second modulation and code scheme is a modulation and code scheme used before disconnection of the first link. The processing unit 1302 is configured to perform link recovery on the first link.

For a specific execution procedure of the communication unit 1301 and the processing unit 1302 in this example, refer to the detailed descriptions of the steps performed by the second apparatus in the foregoing invention content and the specific implementations. Details are not described herein again. In the method implemented by the apparatus, after a millimeter wave link is blocked and disconnected, the first indication information is received, so that the receiver may attempt to perform link recovery on the first link, instead of directly performing beamforming training again on the first link, to avoid a waste of time. Therefore, the method can assist in quick link recovery of the disconnected first link, to help improve data transmission efficiency.

The following describes the multi-link device including a plurality of functional units shown in FIG. 13. The multi-link device in this application includes an access point multi-link device (AP MLD) and a non-access point multi-link device (non-AP MLD). The AP MLD includes one or more APs, and the non-AP MLD includes one or more STAs.

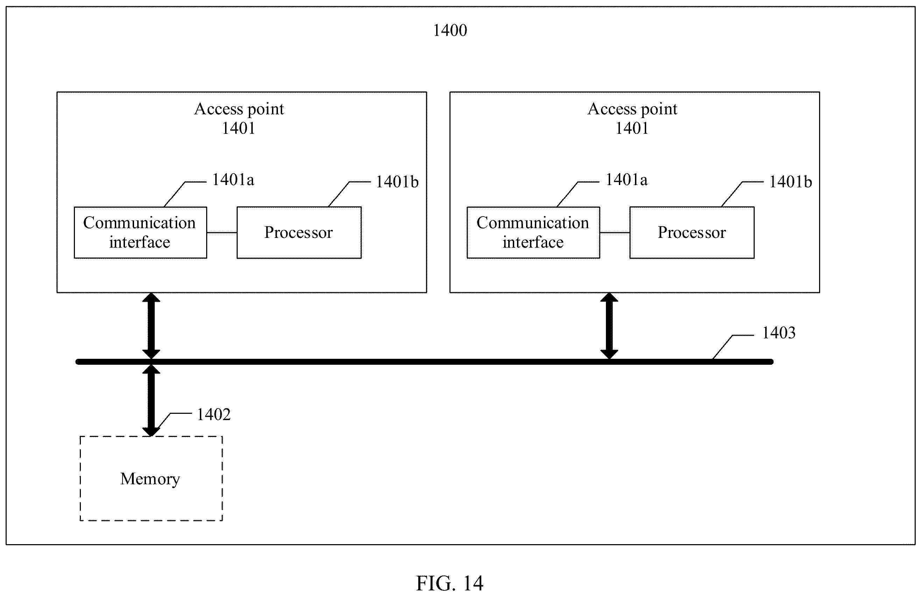

In a possible implementation, the processing unit and the communication unit shown in FIG. 13 are functional units in an AP in the AP MLD. For example, FIG. 14 shows a first type of a multi-link device 1400 according to this application, configured to implement the multi-link data processing method in the foregoing method embodiments. The multi-link device 1400 may alternatively be a chip system. The multi-link device 1400 includes one or more access points 1401 (FIG. 14 shows an example in which two APs are included). Each AP includes a communication interface 1401a and a processor 1401b. The communication interface 1401a may be, for example, a transceiver, an interface, a bus, a circuit, or an apparatus that can implement a transceiver function. The communication interface 1401a is configured to communicate with another device through a transmission medium, so that the multi-link device 1400 can communicate with the another device. The processor 1401b and the communication interface 1401a are configured to implement the methods in embodiments corresponding to FIG. 5 to FIG. 12. It may be understood that the first type of the multi-link device shown in FIG. 14 may alternatively be the non-AP MLD. In this case, the processing unit and the communication unit shown in FIG. 13 are functional units in a STA in the non-AP MLD. A specific implementation is similar to that of the AP MLD, and details are not described herein again.

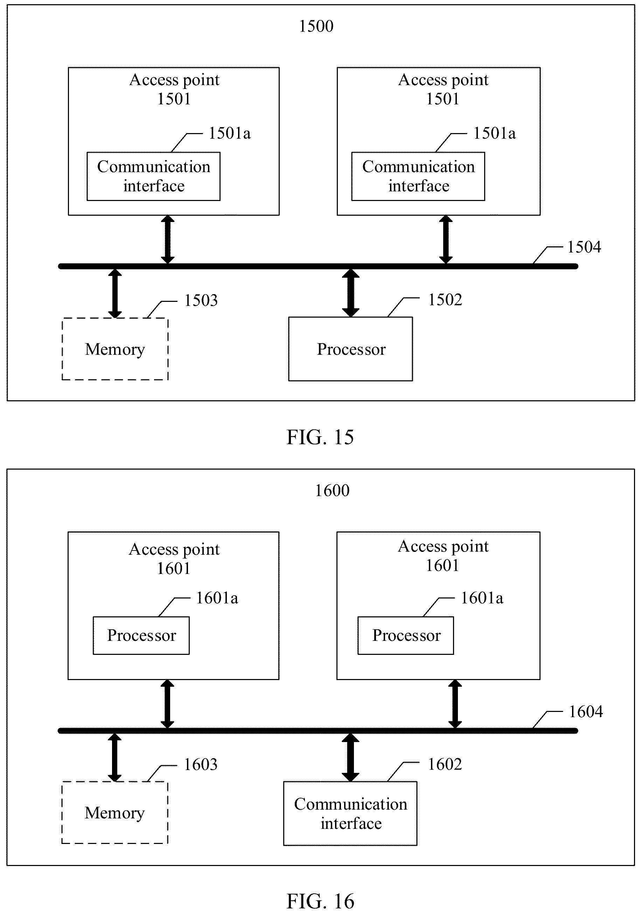

In another possible implementation, the processing unit shown in FIG. 13 is a functional unit in the AP MLD. When there are a plurality of APs, the plurality of APs share the processing unit. The communication unit is a functional unit in an AP in the AP MLD. For example, FIG. 15 shows a second type of a multi-link device 1500 according to this application, configured to implement the multi-link data processing method in the foregoing method embodiments. The multi-link device 1500 may alternatively be a chip system. The multi-link device 1500 includes one or more access points 1501 (FIG. 15 shows an example in which two APs are included). Each AP includes a communication interface 1501a. The multi-link device 1500 includes a processor 1502, and the one or more access points 1501 share the processor 1502. The processor 1502 and the communication interface 1501a are configured to implement the methods in embodiments corresponding to FIG. 5 to FIG. 12. It may be understood that the second type of the multi-link device shown in FIG. 15 may alternatively be the non-AP MLD. In this case, the processing unit shown in FIG. 13 is a functional unit in the non-AP MLD, and the communication unit is a functional unit in a STA in the non-AP MLD. A specific implementation is similar to that of the AP MLD, and details are not described herein again.

In another possible implementation, the processing unit shown in FIG. 13 is a functional unit in an AP in the AP MLD. The communication unit is a functional unit in the AP MLD. When there are a plurality of APs, the plurality of APs share the communication unit. For example, FIG. 16 shows a third type of a multi-link device 1600 according to this application, configured to implement the multi-link data processing method in the foregoing method embodiments. The multi-link device 1600 may alternatively be a chip system. The multi-link device 1600 includes one or more access points 1601 (FIG. 16 shows an example in which two APs are included). Each AP includes a processor 1601a. The multi-link device 1600 includes a communication interface 1602, and the one or more access points 1601 share the communication interface 1602. The processor 1601a and the communication interface 1602 are configured to implement the methods in embodiments corresponding to FIG. 5 to FIG. 12. It may be understood that the third type of the multi-link device shown in FIG. 16 may alternatively be the non-AP MLD. In this case, the communication unit shown in FIG. 13 is a functional unit in the non-AP MLD, and the processing unit is a functional unit in a STAin the non-AP MLD. A specific implementation is similar to that of the AP MLD, and details are not described herein again.

For example, the communication interface and the processor (for example, the processor 1401b and the communication interface 1401a in FIG. 14, the processor 1502 and the communication interface 1501a in FIG. 15, or the processor 1601a and the communication interface 1602 in FIG. 16) are configured to implement the multi-link data processing method in the foregoing invention content and the specific implementations. The communication interface is configured to send first indication information on a second link, where the first indication information indicates to perform link recovery by using a beam configuration parameter used before disconnection of a first link. The processor is configured to perform link recovery on the first link.

For a specific execution procedure of the communication interface and the processor in this example, refer to the detailed descriptions of the method performed by the first apparatus in the foregoing embodiments. Details are not described herein again. In this example, the steps performed by the communication interface and the processor are used to indicate, based on the first indication information, the transmitter and the receiver of data to attempt to perform link recovery on the disconnected millimeter wave link, instead of directly performing beamforming training on the millimeter wave link again, to avoid a waste of time. Therefore, the method can assist in quick link recovery of the disconnected millimeter wave link, to help improve data transmission efficiency.

For example, the communication interface and the processor (for example, the processor 1401b and the communication interface 1401a in FIG. 14, the processor 1502 and the communication interface 1501a in FIG. 15, or the processor 1601a and the communication interface 1602 in FIG. 16) are configured to implement the multi-link data processing method in the foregoing invention content and the specific implementations. The communication interface is configured to send first indication information, where the first indication information indicates to perform link recovery by using a first modulation and code scheme within a maximum retransmission time or a maximum number of retransmissions. A modulation order of the first modulation and code scheme is less than a modulation order of a second modulation and code scheme, and/or a code rate of the first modulation and code scheme is less than a code rate of the second modulation and code scheme; and the second modulation and code scheme is a modulation and code scheme used before disconnection of the first link. The processor is configured to perform link recovery on the first link.

For a specific execution procedure of the communication interface and the processor in this example, refer to the detailed descriptions of the method performed by the first apparatus in the foregoing embodiments. Details are not described herein again. In this example, the steps performed by the communication interface and the processor are used to indicate, based on the first indication information, the transmitter and the receiver of data to attempt to perform link recovery on the disconnected millimeter wave link, instead of directly performing beamforming training on the millimeter wave link again, to avoid a waste of time. Therefore, the method can assist in quick link recovery of the disconnected millimeter wave link, to help improve data transmission efficiency.

For example, the communication interface and the processor (for example, the processor 1401b and the communication interface 1401a in FIG. 14, the processor 1502 and the communication interface 1501a in FIG. 15, or the processor 1601a and the communication interface 1602 in FIG. 16) are configured to implement the multi-link data processing method in the foregoing invention content and the specific implementations. The communication interface is configured to receive first indication information on a second link, where the first indication information indicates to perform link recovery by using a beam configuration parameter used before disconnection of a first link. The processing unit 1302 is configured to perform link recovery on the first link.

For a specific execution procedure of the communication interface and the processor in this example, refer to the detailed descriptions of the method performed by the second apparatus in the foregoing embodiments. Details are not described herein again. In this example, the steps performed by the communication interface and the processor are used to receive the first indication information, so that the receiver may attempt to perform link recovery on the first link, instead of directly performing beamforming training again on the first link, to avoid a waste of time. Therefore, the method can assist in quick link recovery of the disconnected first link, to help improve data transmission efficiency.

For example, the communication interface and the processor (for example, the processor 1401b and the communication interface 1401a in FIG. 14, the processor 1502 and the communication interface 1501a in FIG. 15, or the processor 1601a and the communication interface 1602 in FIG. 16) are configured to implement the multi-link data processing method in the foregoing invention content and the specific implementations. The communication interface is configured to receive first indication information on a second link, where the first indication information indicates to perform link recovery by using a first modulation and code scheme within a maximum retransmission time or a maximum number of retransmissions; a modulation order of the first modulation and code scheme is less than a modulation order of a second modulation and code scheme, and/or a code rate of the first modulation and code scheme is less than a code rate of the second modulation and code scheme; and the second modulation and code scheme is a modulation and code scheme used before disconnection of the first link. The processing unit 1302 is configured to perform link recovery on the first link.

For a specific execution procedure of the communication interface and the processor in this example, refer to the detailed descriptions of the method performed by the second apparatus in the foregoing embodiments. Details are not described herein again. In this example, the steps performed by the communication interface and the processor are used to receive the first indication information, so that the receiver may attempt to perform link recovery on the first link, instead of directly performing beamforming training again on the first link, to avoid a waste of time. Therefore, the method can assist in quick link recovery of the disconnected first link, to help improve data transmission efficiency.

Optionally, the multi-link device may further include at least one memory (for example, the memory 1402 in FIG. 14, the memory 1503 in FIG. 15, or the memory 1603 in FIG. 16), configured to store program instructions and/or data. In an implementation, the memory is coupled to the processor. The coupling in this application may be an indirect coupling or a communication connection between apparatuses, units, or modules in an electrical form, a mechanical form, or another form, and is used for information exchange between the apparatuses, the units, or the modules. The processor may perform an operation in collaboration with the memory. The processor may execute the program instructions stored in the memory. The at least one memory and the processor are integrated together.

In this application, a specific connection medium between the communication interface, the processor, and the memory is not limited. For example, the memory, the processor, and the communication interface are connected through a bus. The bus is represented by using a thick line in FIG. 14 to FIG. 16 (for example, 1403 in FIG. 14, 1504 in FIG. 15, and 1604 in FIG. 16). A manner of connection between other components is merely an example for description, and is not limited thereto. The bus may be classified into an address bus, a data bus, a control bus, and the like. For ease of representation, only one bold line represents the bus in FIG. 14 to FIG. 16, but this does not mean that there is only one bus or only one type of bus.

In this application, the processor may be a general-purpose processor, a digital signal processor, an application-specific integrated circuit, a field programmable gate array or another programmable logic device, a discrete gate or transistor logic device, or a discrete hardware component, and may implement or perform methods, steps, and logical block diagrams that are disclosed in this application. The general purpose processor may be a microprocessor or any conventional processor or the like. The steps of the method disclosed with reference to this application may be directly performed by a hardware processor, or may be performed by using a combination of hardware in the processor and a software module.

In this application, the memory may be a nonvolatile memory, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of instruction or data structure and that can be accessed by a computer, but is not limited thereto. The memory in this application may alternatively be a circuit or any other apparatus that can implement a storage function, and is configured to store program instructions and/or data.

This application provides a computer-readable storage medium. The computer-readable storage medium stores a program or instructions. When the program or the instructions are run on a computer, the computer is enabled to perform the multi-link data processing method in embodiments corresponding to FIG. 5 to FIG. 12.

This application provides a computer program product. The computer program product includes instructions. When the instructions are run on a computer, the computer is enabled to perform the multi-link data processing method in embodiments corresponding to FIG. 5 to FIG. 12.

This application provides a chip or a chip system. The chip or the chip system includes at least one processor and an interface. The interface and the at least one processor are interconnected through a line. The at least one processor is configured to run a computer program or instructions, to perform the multi-link data processing method in embodiments corresponding to FIG. 5 to FIG. 12.

The interface in the chip may be an input/output interface, a pin, a circuit, or the like.

The chip system may be a system on chip (system on chip, SOC), a baseband chip, or the like. The baseband chip may include a processor, a channel encoder, a digital signal processor, a modem, an interface module, and the like.

In an implementation, the chip or the chip system described above in this application further includes at least one memory, and the at least one memory stores instructions. The memory may be a storage unit inside the chip, for example, a register or a cache, or may be a storage unit (for example, a read-only memory or a random access memory) of the chip.

All or some of the technical solutions provided in this application may be implemented by using software, hardware, firmware, or any combination thereof. When software is used to implement embodiments, all or a part of embodiments may be implemented in a form of computer program product. The computer program product includes one or more computer instructions. When the computer program instructions are loaded and executed on the computer, the procedure or functions according to this application are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device like a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, without a logical contradiction, mutual reference can be made between embodiments. For example, mutual reference can be made between methods and/or terms in method embodiments, mutual reference can be made between functions and/or terms in apparatus embodiments, and mutual reference can be made between functions and/or terms in the apparatus embodiments and the method embodiments.

It is clearly that, a person skilled in the art can make various modifications and variations to this application without departing from the scope of this application. This application is intended to cover these modifications and variations of this application provided that they fall within the scope of protection defined by the following claims of this application and their equivalent technologies.

## Claims

1. A multi-link data processing method, comprising:
sending first indication information on a second link, wherein the first indication information indicates to perform link recovery by using a beam configuration parameter used before disconnection of a first link; and
performing link recovery on the first link.

2. A multi-link data processing method, comprising:
sending first indication information on a second link, wherein the first indication information indicates to perform link recovery by using a first modulation and code scheme within a maximum retransmission time or a maximum number of retransmissions; a modulation order of the first modulation and code scheme is less than a modulation order of a second modulation and code scheme, and/or a code rate of the first modulation and code scheme is less than a code rate of the second modulation and code scheme; and the second modulation and code scheme is a modulation and code scheme used before disconnection of the first link; and
performing link recovery on the first link.

3. A multi-link data processing method, comprising:
receiving first indication information on a second link, wherein the first indication information indicates to perform link recovery by using a beam configuration parameter used before disconnection of a first link; and
performing link recovery on the first link.

4. A multi-link data processing method, comprising:
receiving first indication information on a second link, wherein the first indication information indicates to perform link recovery by using a first modulation and code scheme within a maximum retransmission time or a maximum number of retransmissions; a modulation order of the first modulation and code scheme is less than a modulation order of a second modulation and code scheme, and/or a code rate of the first modulation and code scheme is less than a code rate of the second modulation and code scheme; and the second modulation and code scheme is a modulation and code scheme used before disconnection of the first link; and
performing link recovery on the first link.

5. The method according to any one of claims 1 to 4, wherein the method further comprises:
configuring the maximum retransmission time, wherein the maximum retransmission time indicates a maximum value of duration for performing link recovery on the first link, and the maximum retransmission time is predefined in a protocol or determined through negotiation between an access point and a non-access point.

6. The method according to claim 5, wherein the method further comprises:
if the first link is successfully recovered within the maximum retransmission time, transmitting data on the first link; or
if the first link fails to be recovered after the maximum retransmission time, performing beamforming training again on the first link.

7. The method according to any one of claims 1 to 4, wherein the method further comprises:
configuring the maximum number of retransmissions, wherein the maximum number of retransmissions indicates a maximum value of a quantity of link recovery attempts performed on the first link, and the maximum number of retransmissions is predefined in a protocol or determined through negotiation between an access point and a non-access point.

8. The method according to claim 7, wherein the method further comprises:
if the first link is successfully recovered within the maximum number of retransmissions, transmitting data on the first link; or
if the first link fails to be recovered after the maximum number of retransmissions, performing beamforming training again on the first link.

9. The method according to claim 1 or 3, wherein performing link recovery on the first link comprises:
performing link recovery on the first link by using a short data frame, a control frame, or a management frame.

10. The method according to claim 2 or 4, wherein performing link recovery on the first link comprises:
performing link recovery on the first link by using a data frame of the first modulation and code scheme.

11. The method according to any one of claims 1 to 10, wherein the first indication information is comprised in a data frame, or the first indication information is a management frame or a control frame.

12. The method according to any one of claims 1 to 4, wherein the method further comprises:
separately configuring a first service period on the first link and the second link, wherein a start moment of the first service period is a first moment, the first moment is a specified moment at which a transmitter and a receiver of the first link are synchronized after disconnection of the first link, and an operating frequency of the second link is lower than an operating frequency of the first link; or
configuring the first service period on the first link.

13. The method according to claim 1 or 2, wherein the method further comprises:
when a first service period is not configured on the second link, sending second indication information, wherein the second indication information indicates, to a receiver, that there is data that needs to be sent on a link below 10 GHz or a link below 7 GHz at a transmitter.

14. The method according to claim 3 or 4, wherein the method further comprises:
when a first service period is not configured on the second link, receiving second indication information, wherein the second indication information indicates, to a receiver, that there is data that needs to be sent on a link below 10 GHz or a link below 7 GHz at a transmitter.

15. The method according to claims 1 to 4, wherein the first indication information is comprised in a first field, or the first indication information is comprised in a combination of a first field and a second field, wherein
when the first indication information is comprised in the first field, the first field is used to indicate to perform beamforming training again on the first link or indicate to perform link recovery and then perform beamforming training again after link recovery fails; or
when the first indication information is comprised in the combination of the first field and the second field, the combination of the first field and the second field is used to indicate to perform beamforming training again on the first link, indicate to perform link recovery and not to perform beamforming training, or indicate to perform link recovery and then perform beamforming training again after link recovery fails.

16. The method according to any one of claims 1 to 15, wherein the second link comprises a link below 10 gigahertz (GHz) or a link below 7 GHz, and the first link is a millimeter wave link.

17. A communication apparatus, comprising a unit or a module configured to perform the method according to any one of claims 1 to 16.

18. A multi-link device, comprising a processor and a memory, wherein the memory is configured to store instructions, and when the instructions are executed by the processor, the communication apparatus is enabled to perform the method according to any one of claims 1 to 16.

19. A communication system, comprising a first apparatus and/or a second apparatus, wherein the first apparatus is configured to perform the method according to any one of claims 1, 2, and 5 to 16, and the second apparatus is configured to perform the method according to any one of claims 3, 4, and 5 to 16.

20. A computer-readable storage medium, wherein the computer-readable storage medium stores instructions, and when the instructions are run on a computer, the computer is enabled to perform the method according to any one of claims 1 to 16.

21. A chip system, wherein the chip system comprises a processor and an interface; and the processor is configured to execute a computer program, to enable the chip system to implement the method according to any one of claims 1 to 16.

22. A computer program product, comprising instructions, wherein when the instructions are run on a computer, the computer is enabled to perform the method according to any one of claims 1 to 16.
